# EUROPÄISCHE PATENTSCHRIFT

(11) **EP 2 670 579 B1**
(45) Veröffentlichungstag und Bekanntmachung des Hinweises auf die Patenterteilung: **26.12.2018**
(21) Anmeldenummer: 12716177.6
(22) Anmeldetag: 09.01.2012
(51) Int. Cl.: B29C 49/42, B29C 49/06, B29C 49/64

(54) **ANLAGE SOWIE VERFAHREN ZUR HERSTELLUNG VON HOHLKÖRPERN DURCH SPRITZGIESSEN UND BLASFORMEN**
INSTALLATION AND METHOD FOR THE PRODUCTION OF HOLLOW BODIES BY INJECTION MOLDING AND BLOW MOLDING
INSTALLATION ET PROCÉDÉ DE PRODUCTION DE CORPS CREUX PAR MOULAGE PAR INJECTION ET MOULAGE PAR SOUFFLAGE

(30) Priorität: 07.01.2011 AT 222011
(43) Veröffentlichungstag der Anmeldung: 11.12.2013
(73) Patentinhaber: Mould & Matic Solutions GmbH, 4563 Micheldorf (AT)
(72) Erfinder: KLAUSRIEGLER, Heinz, A-4550 Kremsmünster (AT)
(74) Vertreter: Farago-Schauer, Peter Andreas
(86) Internationale Anmeldenummer: PCT/AT2012/050003
(87) Internationale Veröffentlichungsnummer: WO 2012/092639

(56) Entgegenhaltungen:
- WO-A2-02/38353
- WO-A2-02/38353
- WO-A2-02/38353
- GB-A- 2 094 755
- GB-A- 2 094 755
- GB-A- 2 094 755
- JP-A- H11 138 582
- JP-A- H11 138 582
- JP-A- 2003 305 766
- JP-A- 2003 305 766
- JP-A- 2003 305 766
- JP-A- 2010 149 460
- JP-A- 2010 149 460
- JP-A- 2010 149 460
- US-A- 5 753 279
- US-A- 5 753 279

## Beschreibung

Die Erfindung betrifft eine Anlage und ein Verfahren zur Herstellung von Hohlkörpern durch Spritzgießen und nachfolgendes Blasformen. Grundsätzlich unterscheidet man in der Blasformtechnik einen einstufigen und einen zweistufigen Herstellungsprozess von Hohlkörpern. In einem zweistufigen Prozess werden zuerst die Vorformlinge in einer eigenen Spritzgießstation hergestellt und mit noch geringem Volumenbedarf gelagert. Werden fertige Hohlkörper benötigt, werden die Vorformlinge geordnet durch Heizkammern geführt und gegebenenfalls zum Teil zonenweise unterschiedlich temperiert. Danach werden die so vorgewärmten Vorformlinge der Blasform zugeführt und dort anschließend mit hohem Druck aufgeblasen und der endgültige Hohlkörper, beispielsweise in Flaschen oder Dosenform bzw. Kanisterform, hergestellt.
Im weiters bekannten einstufigen Prozess erfolgt zuerst die Herstellung des Vorformlings in einem Spritzgießwerkzeug, wobei der Vorformling aus diesem entnommen wird und anschließend im Zuge eines Drehtisches der Blasstation zur endgültigen Formgebung übergeben wird. Dabei ist es möglich, dass der hergestellte Vorformling entweder im Bereich seines Außenumfanges am Kragen gehalten wird oder direkt am Formkern des Spritzgießwerkzeuges verbleibt und mittels diesem an die Blasstation weiter transportiert wird.
Die GB 2 094 755 A bzw. die DE 30 06 064 A beschreiben eine gattungsgemäße Anlage zur Herstellung von Hohlkörpern durch Spritzgießen und unmittelbar nachfolgendes Blasformen. Die Anlage umfasst ein Spritzgießwerkzeug mit Kavitäten zur Herstellung der Vorformlinge, welche einen Halsfortsatz sowie einen an den Halsfortsatz anschließenden Hohlkörperteil aufweisen. Weiters umfasst die Anlage noch eine Blasform zur Formgebung von Hohlkörpern aus den Vorformlingen, wobei die im Spritzgießwerkzeug hergestellten Vorformlinge durch Transfermittel vom Spritzgießwerkzeug hin zur Blasform transportiert werden. Das Spritzgießwerkzeug weist einen feststehenden Formabschnitt sowie eine dazu relativ bewegbare Formplatte mit daran angeordneten Kernstäben auf. An einer weiteren Platte des Spritzgießwerkzeuges sind Halsringanordnungen befestigt, welche einerseits während des Spritzgussvorganges die Halsform des Vorformlings außenseitig ausbilden und andererseits während der Entnahme der Vorformlinge diese bis zu einer ersten Übergabe auf einen Herausnahme- bzw. Abnahmemechanismus halten. Dieser Herausnahme- bzw. Abnahmemechanismus weist für jeden der Vorformlinge eigene Greifbackensätze auf, welche die aus dem Spritzgießwerkzeug und noch an den Halsringanordnungen gehaltenen Vorformlinge ebenfalls außenseitig ergreifen. Nach dem Ergreifen wird die Halterung der Vorformlinge von den außenseitig angreifenden Halsringanordnungen gelöst. Die von den einzelnen Greifbackensätzen mit den jeweils zusammenwirkenden Greiffingern gehaltenen Vorformlinge verbringen diese in eine Umsetzstation, in welcher die einzelnen Vorformlinge auf druckluftbetätigte Spann- oder Klemmhülsen übergeben werden. Die Spann- oder Klemmhülsen werden dabei jeweils in die offenen Enden der Vorformlinge eingeführt und dann aufgespreizt, um jeden der Vorformlinge sicher festzuhalten. Über eine Schwenkbewegung werden die bislang in horizontaler Lage ausgerichteten Vorformlinge in eine senkrechte sowie hängende Lage verbracht. In der lotrechten Stellung der einzelnen Vorformlinge werden diese von den Spann- oder Klemmhülsen an eine eigene Speicherplatte übergeben und dort von außenseitig schließenden Backen aufgenommen und gehalten. In dieser außenseitigen Halterung der einzelnen Vorformlinge an den Backen werden diese in die Blasform zur Endformgebung verbracht. Damit sind ab dem ersten Übernahmevorgang der Vorformlinge bis zum Erreichen der Blasform drei zueinander unterschiedliche Haltesysteme notwendig, um die Umsetz- und Übergabevorgänge vom Spritzgießwerkzeug hin zur Blasform durchführen zu können.

Die JP 2010-149460 A beschreibt ein an dem inneren Umfang des Halsfortsatzes des Vorformlings angreifendes Halteorgan. Dieses weist einen Klemmmechanismus auf, mit welchem der Vorformling nach dessen Erwärmung in eine Blasform eingesetzt werden kann. Um in der Blasform einen Zugang in das Innere des umzuformenden Vorformlings zu schaffen, ist das Halteorgan aus dem Inneren des Vorformlings zu entfernen und an eine außenliegende Backenhalterung im Bereich der Blasformstation zu übergeben, um so erst einen Zugang für die Formgebungsmittel zur nachfolgenden Formgebung des Vorformlings hin zum Hohlkörper zu schaffen.

Aus der JP 2003-305766 A ist ein Verfahren sowie eine Vorrichtung zur Kristallisation des Halsbereiches eines Vorformlings bekannt geworden. In diesem Fall ist der Vorformling bereits hergestellt und abgekühlt worden, wobei die nachträgliche Erwärmung für die Durchführung der Kristallisation des Halsbereiches des Vorformlings durchgeführt wird. Bei diesem Vorgang werden die Vorformlinge innenseitig zuerst von einem rohrförmigen Körper aufgenommen und anschließend in eine Aufnahmehülse eingesetzt, in welche Aufnahmehülse jener an den Halsfortsatz anschließenden Hohlkörperteil hineinragt und von der Aufnahmehülse gegen den Zutritt von Strahlung abgeschirmt ist. Damit liegt der Vorformling während der Kristallisation seines Halsfortsatzes an einem im Übergangsbereich zwischen dem Halsfortsatz und dem Hohlkörperteil angeordneten Flansch stirnseitig an der Aufnahmehülse auf. Auch hier sind wiederum mehrere Übergabevorgänge mit zueinander unterschiedlichen Halteorganen notwendig, um in einem Zweistufenprozess den fertigen Hohlkörper aus dem bereits vorgefertigten und abgekühlten Vorformling herstellen zu können.

Die WO 02/38353 A2 beschreibt ein Halteorgan, welches in den offenen Halsfortsatz des Vorformlings für die Durchführung von Umsetzbewegungen darin eingesetzt ist. Auch dieses Halteorgan ist nach dem Einbringen des Vorformlings in die Blasform aus dem Inneren des Haltefortsatzes zu entfernen, um so erst einen Zugang für die Formgebungsmittel zur nachfolgenden Formgebung des Vorformlings hin zum Hohlkörper durchführen zu können.

Die JP H11 138582 A beschreibt eine Vorrichtung sowie ein Verfahren zum Herstellen von Vorformlingen, welche nach deren Herstellung im Spritzgießwerkzeug in eine Blasformstation verbracht werden können und dort die Endformgebung durchgeführt werden kann. Jene Backen des Spritzgießwerkzeugs, welche die Außenform des Halses des Vorformlings ausbilden, dienen auch noch dazu, den hergestellten Vorformling aus dem Spritzgießwerkzeug zu entnehmen und diesen an seiner Außenseite weiter haltend zu einer nachfolgenden Heizstation zu verbringen. In dieser werden die Backen an deren Außenseite erwärmt, um den innerhalb der Backen angeordneten Hals auf seine Kristallisationstemperatur zu verbringen. Nach dieser Temperaturbehandlung werden die Backen geöffnet und es kann der Vorformling entnommen werden. Anschließend werden die Backen zurück zum Spritzgießwerkzeug verbracht, um erneut als Werkzeugteil des Spritzgießwerkzeugs eingesetzt werden zu können.

Die US 5,753,279 A beschreibt eine andere Spritzgieß-Blasanlage sowie ein Verfahren dazu. Die Anlage umfasst eine Vorformstation zur Herstellung der Vorformlinge, eine Blasformstation zum Streckblasformen der Vorformlinge sowie eine Übergabestation zur Übergabe der Vorformlinge von der Vorformstation zur Blasformstation. Die Vorformstation umfasst ihrerseits eine Spritzgießstation, eine Ausstoßstation zum Lösen und Ausstoßen der Vorformlinge und eine Umlauftransporteinrichtung zum schrittweisen Transportieren der Vorformlinge von der Spritzgießstation zur Ausstoßstation. Dabei ist die Umlauftransporteinrichtung derart ausgebildet, dass diese eine Vielzahl von Kernformen und Halsaußenformen transportieren kann. Dabei sind die Kernformen und Halsaußenformen für das Durchströmen eines Kühlmittels ausgebildet, um so die jeweils von diesen gehaltenen Vorformlinge während deren Transport in der Umlauftransporteinrichtung abkühlen zu können. Nach ausreichender Abkühlung können die Vorformlinge von der Kernform abgestreift werden. In der Blasformstation wird jeder Vorformling von einem eigenen Tragelement durch eine Heizstation transportiert, und in dieser auf die erforderliche Umformtemperatur erwärmt.

Der vorliegenden Erfindung liegt die Aufgabe zugrunde, eine Anlage zur Herstellung von Hohlkörpern durch Spritzgießen und nachfolgendes Blasformen zu schaffen, bei welcher im unmittelbaren Anschluss an den Spritzgussvorgang die endgültige Formgebung des Hohlkörpers erfolgt und dabei der gesamte Transport innerhalb der Anlage einfach gestaltet werden kann.

Diese Aufgabe der Erfindung wird durch die Merkmale des Anspruches 1 gelöst. Der sich durch die Merkmale des Anspruches 1 ergebende Vorteil liegt darin, dass so mit geringstem Aufwand eine exakte Führung des Transfermittels in der gesamten Anlage ermöglicht wird. Damit kann ein nahezu unabhängiger Betrieb zwischen dem Spritzgießwerkzeug und der Blasstation mit ihrer Blasform erfolgen. Dadurch, dass hier mit zumindest einem Transfermittel das Auslangen gefunden werden kann, wird nach dem Öffnen des Spritzgießwerkzeuges und der Entnahme der Vorformlinge und der damit verbundenen Übergabe an das Transfermittel, nach einer kurzen Transportstrecke bereits wieder die Möglichkeit geschaffen, das Spritzgießwerkzeug zu schließen und einen erneuten Spritzgussvorgang durchzuführen, währenddessen das Transfermittel mitsamt der Vorformlinge hin zur Blasstation bewegt wird. Dadurch, dass bereits bei der Übernahme der Vorformlinge eine innenliegende Halterung bzw. Klemmung an den Halteorganen des Transfermittels erfolgt, sind im Bereich der Außenseite des Vorformlings und des darauffolgend hergestellten Hohlkörpers alle Außenflächen ungehindert zugänglich. Somit werden unnötige Übergabevorgänge vermieden und trotzdem ein einwandfreier Herstellvorgang der Hohlkörper aus den Vorformlingen ermöglicht. Damit kann ohne hohen Manipulationsaufwand der Vorformling direkt in die Blasform eingesetzt werden und nach dem endgültigen Herstellvorgang der daraus hergestellte Hohlkörper ohne zusätzliche Übergabevorgänge entnommen und mit dem gleichen Halteorgan entnommen und weiterbewegt werden. Durch das speziell ausgebildete Halteorgan erfolgt nicht nur eine innenliegende Halterung des Vorformlings sowie des daraus hergestellten Hohlkörpers, sondern es können darüber hinaus auch noch im Bereich der Blasstation für die Endformgebung die entsprechenden Umformmittel durch das Halteorgan hindurch durchgeführt werden. Damit wird eine zentrale platzsparende Halterung für die Vorformlinge bzw. die später daraus hergestellten Hohlkörper geschaffen.

Vorteilhaft ist auch eine weitere Ausführungsform nach Anspruch 2, da dadurch die Möglichkeit geschaffen wird, im Bereich des Halteorgans eine gesteuerte, individuelle Halterung bzw. Klemmung der daran zu halternden Vorformlinge bzw. Hohlkörper sicherzustellen. Damit wird nicht nur ein vereinfachtes Aufsetzen des Vorformlings auf das Halteorgan erreicht, sondern auch eine beschädigungsfreie Klemmung am Halteorgan erzielt. Wird der Klemmkörper über den Umfang durchlaufend ausgebildet, kann so eine gleichmäßigere Druckverteilung erreicht werden. Weiters lässt sich dadurch aber auch eine bessere Positionierung der umzuformenden Vorformlinge im Bereich der Blasform erzielen.

Durch die Ausbildung nach Anspruch 3 ist es möglich, auch im Bereich der Blasstation, insbesondere deren Blasform, eine geradlinige Transportbewegung des Transfermittels mit seinem Tragrahmen beibehalten zu können und trotzdem eine ungehinderte Entformung der in der Blasform hergestellten Hohlkörper zu ermöglichen.

Nach einer anderen Ausführungsvariante gemäß Anspruch 4 wird so eine Mehrfachherstellung von Vorformlingen sowie der daraus gebildeten Hohlkörper ermöglicht, wobei trotzdem in der gesamten Anlage ein geradliniger Förderweg beibehalten werden kann.

Bei der Ausgestaltung nach Anspruch 5 ist von Vorteil, dass so bereits im Bereich des Spritzgießwerkzeuges für die Entnahme der hergestellten Vorformlinge ein eigener Werkzeugteil vorgesehen wird, welcher nicht nur zur Bildung eines Teilabschnitts des Vorformlings dient, sondern gleichzeitig auch noch die Entformbewegung der Vorformlinge aus dem geöffneten Spritzgießwerkzeug ermöglicht. Nach der Übergabe der Vorformlinge hin auf das Transfermittel erfolgt erst die außenseitige Freigabe der Vorformlinge vom Werkzeugteil. Nach entsprechenden Rückstellvorgängen sowie dem Schließen des gesamten Spritzgießwerkzeuges stehen erneut vorgegebene Hohlräume bzw. Kavitäten für den weiteren Spritzgießvorgang zur Verfügung.

Durch die Weiterbildung nach Anspruch 6 wird erreicht, dass so durch die seitlich gewählte Öffnungsbewegung der Blasformteile der Blasform die geradlinige Weiterbewegung des Transfermittels beibehalten werden kann und trotzdem eine ordnungsgemäße Entformung der hergestellten Hohlkörper ermöglicht wird.

Vorteilhaft ist auch eine Ausbildung nach Anspruch 7, da so auch im Bereich der Blasstation eine einfache Entformung und Entnahme der hergestellten Hohlkörper erfolgen kann, ohne dass dabei das Transfermittel eine gesonderte Führungsbahn benötigt.

Die Aufgabe der Erfindung wird aber unabhängig davon auch durch ein Verfahren zur Herstellung von Hohlkörpern durch Spritzgießen und nachfolgendes Blasformen gemäß den im Anspruch 8 angegebenen Merkmalen gelöst. Die sich aus der Merkmalskombination dieses Anspruches ergebenden Vorteile liegen darin, dass so mit geringstem Aufwand eine exakte Führung des Transfermittels in der gesamten Anlage ermöglicht wird. Damit kann ein nahezu unabhängiger Betrieb zwischen dem Spritzgießwerkzeug und der Blasstation mit ihrer Blasform erfolgen. Dadurch, dass hier mit zumindest einem Transfermittel das Auslangen gefunden werden kann, wird nach dem Öffnen des Spritzgießwerkzeuges und der Entnahme der Vorformlinge und der damit verbundenen Übergabe an das Transfermittel, nach einer kurzen Transportstrecke bereits wieder die Möglichkeit geschaffen, das Spritzgießwerkzeug zu schließen und einen erneuten Spritzgussvorgang durchzuführen, währenddessen das Transfermittel mitsamt der Vorformlinge hin zur Blasstation bewegt wird. Dadurch, dass bereits bei der Übernahme der Vorformlinge eine innenliegende Halterung bzw. Klemmung an den Halteorganen des Transfermittels erfolgt, sind im Bereich der Außenseite des Vorformlings und des darauffolgend hergestellten Hohlkörpers alle Außenflächen ungehindert zugänglich. Somit werden unnötige Übergabevorgänge vermieden und trotzdem ein einwandfreier Herstellvorgang der Hohlkörper aus den Vorformlingen ermöglicht. Damit kann ohne hohen Manipulationsaufwand der Vorformling direkt in die Blasform eingesetzt werden und nach dem endgültigen Herstellvorgang der daraus hergestellte Hohlkörper ohne zusätzliche Übergabevorgänge entnommen und mit dem gleichen Halteorgan entnommen und weiterbewegt werden.

Durch das speziell ausgebildete Halteorgan erfolgt nicht nur eine innenliegende Halterung des Vorformlings sowie des daraus hergestellten Hohlkörpers, sondern es können darüber hinaus auch noch im Bereich der Blasstation für die Endformgebung die entsprechenden Umformmitteln durch das Halteorgan hindurch durchgeführt werden. Damit wird eine zentrale platzsparende Halterung für die Vorformlinge bzw. die später daraus hergestellten Hohlkörper geschaffen.

Dabei erweist sich ein Vorgehen nach Anspruch 9 als vorteilhaft, da so die Möglichkeit geschaffen wird, im Bereich des Halteorgans eine gesteuerte, individuelle Halterung bzw. Klemmung der daran zu halternden Vorformlinge bzw. Hohlkörper sicherzustellen. Damit wird nicht nur ein vereinfachtes Aufsetzen des Vorformlings auf das Halteorgan erreicht sondern auch eine beschädigungsfreie Klemmung am Halteorgan erzielt. Wird der Klemmkörper über den Umfang durchlaufend ausgebildet, kann so eine gleichmäßigere Druckverteilung erreicht werden. Weiters lässt sich dadurch aber auch eine bessere Positionierung der umzuformenden Vorformlinge im Bereich der Blasform erzielen.

Von Vorteil ist aber auch eine Verfahrensvariante nach Anspruch 10, da so auch im Bereich der Blasstation, insbesondere deren Blasform, eine geradlinige Transportbewegung des Transfermittels mit seinem Tragrahmen beibehalten werden kann und trotzdem eine ungehinderte Entformung der in der Blasform hergestellten Hohlkörper ermöglicht wird.

Weiters ist ein Vorgehen gemäß den im Anspruch 11 angegebenen Merkmalen vorteilhaft, weil so bereits im Bereich des Spritzgießwerkzeuges für die Entnahme der hergestellten Vorformlinge ein eigener Werkzeugteil vorgesehen wird, welcher nicht nur zur Bildung eines Teilabschnitts des Vorformlings dient, sondern gleichzeitig auch noch die Entformbewegung der Vorformlinge aus dem geöffneten Spritzgießwerkzeug ermöglicht. Nach der Übergabe der Vorformlinge hin auf das Transfermittel erfolgt erst die außenseitige Freigabe der Vorformlinge vom Werkzeugteil. Nach entsprechenden Rückstellvorgängen sowie dem Schließen des gesamten Spritzgießwerkzeuges stehen erneut vorgegebene Hohlräume bzw. Kavitäten für den weiteren Spritzgießvorgang zur Verfügung.

Möglich ist dabei auch eine Verfahrensvariante nach Anspruch 12, da so durch die seitlich gewählte Öffnungsbewegung der Blasformteile der Blasform die geradlinige Weiterbewegung des Transfermittels beibehalten werden kann und trotzdem eine ordnungsgemäße Entformung der hergestellten Hohlkörper sichergestellt wird. Vorteilhaft ist die Verfahrensvariante nach Anspruch 13, da so auch im Bereich der Blasstation eine einfache Entformung und Entnahme der hergestellten Hohlkörper erfolgen kann, ohne dass dabei durch das Transfermittel eine gesonderte Führungsbahn benötigt wird.

Zum besseren Verständnis der Erfindung wird diese anhand der nachfolgenden Figuren näher erläutert.

Es zeigen jeweils in stark schematisch vereinfachter Darstellung:
- Fig. 1: eine erfindungsgemäße Anlage zur Herstellung von Hohlkörpern aus einem Vorformling, in Ansicht und vereinfachter Darstellung;
- Fig. 2: eine mögliche Ausführungsform des Transfermittels zum Transport der herzustellenden Hohlkörper aus den Vorformlingen, in einer Ansicht von oben und schaubildlich vereinfachter Darstellung;
- Fig. 3: das Transfermittel nach Fig. 2, in einer Ansicht von unten und schaubildlich vereinfachter Darstellung;
- Fig. 4: das Spritzgießwerkzeug in vereinfachter schaubildlicher Darstellung, im geschlossenen Zustand;
- Fig. 5: das Spritzgießwerkzeug nach Fig. 4 in Ansicht und geöffneter Stellung;
- Fig. 6: das Spritzgießwerkzeug nach den Fig. 4 und 5 in geöffneter Stellung und dem Transfermittel zwischen den Formteilen, in schaubildlich vereinfachter Darstellung;
- Fig. 7: einen Teilabschnitt des Halteorgans mit dem zusätzlichen Werkzeugteil des Spritzgießwerkzeuges in der Übergabestellung des Vorformlings, in Ansicht geschnitten und vereinfachter Darstellung;
- Fig. 8: eine erste Ausführungsform des Halteorgans mit einem von diesem gehaltenen Vorformling, in Ansicht geschnitten und vereinfachter Darstellung;
- Fig. 9: eine andere Ausbildung des Halteorgans mit einem von diesem gehaltenen Vorformling, in Ansicht geschnitten und vereinfachter Darstellung;
- Fig. 10: eine weitere mögliche Ausbildung des Halteorgans mit einem von diesem gehaltenen Vorformling, in Ansicht geschnitten und vereinfachter Darstellung;
- Fig. 11: eine mögliche Ausbildung der Blasstation mit der Blasform in einer geschlossenen Betriebsstellung; in Ansicht und vereinfachter Darstellung;
- Fig. 12: die Blasstation nach Fig. 11, jedoch mit geöffneter Blasform, in Ansicht und vereinfachter Darstellung;
- Fig. 13: eine nicht vom Schutzumfang umfasst Ausbildung eines Werkzeugwagens zur Montagehilfe des Spritzgießwerkzeuges, in schaubildlich vereinfachter Darstellung;
- Fig. 14: eine weitere möglich Ausbildung eines Halteorgans mit einem von diesem gehaltenen Vorformling, in Ansicht geschnitten;
- Fig. 15: das Spritzgießwerkzeug sowie die Blasform in Draufsicht sowie stark schematisch vereinfachter Darstellung.

Einführend sei festgehalten, dass in den unterschiedlich beschriebenen Ausführungsformen gleiche Teile mit gleichen Bezugszeichen bzw. gleichen Bauteilbezeichnungen versehen werden, wobei die in der gesamten Beschreibung enthaltenen Offenbarungen sinngemäß auf gleiche Teile mit gleichen Bezugszeichen bzw. gleichen Bauteilbezeichnungen übertragen werden können. Auch sind die in der Beschreibung gewählten Lageangaben, wie z.B. oben, unten, seitlich usw. auf die unmittelbar beschriebene sowie dargestellte Figur bezogen und sind bei einer Lageänderung sinngemäß auf die neue Lage zu übertragen.

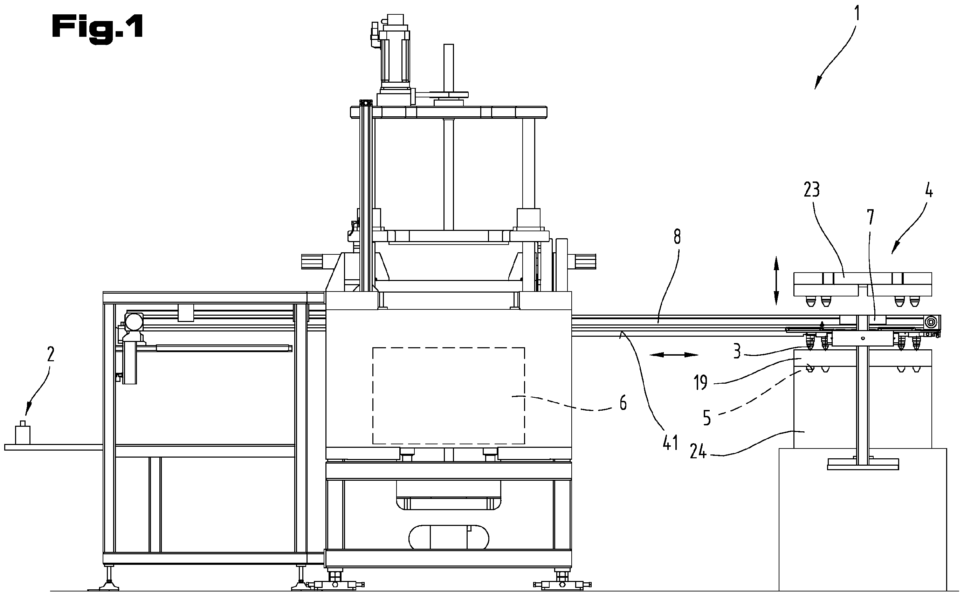

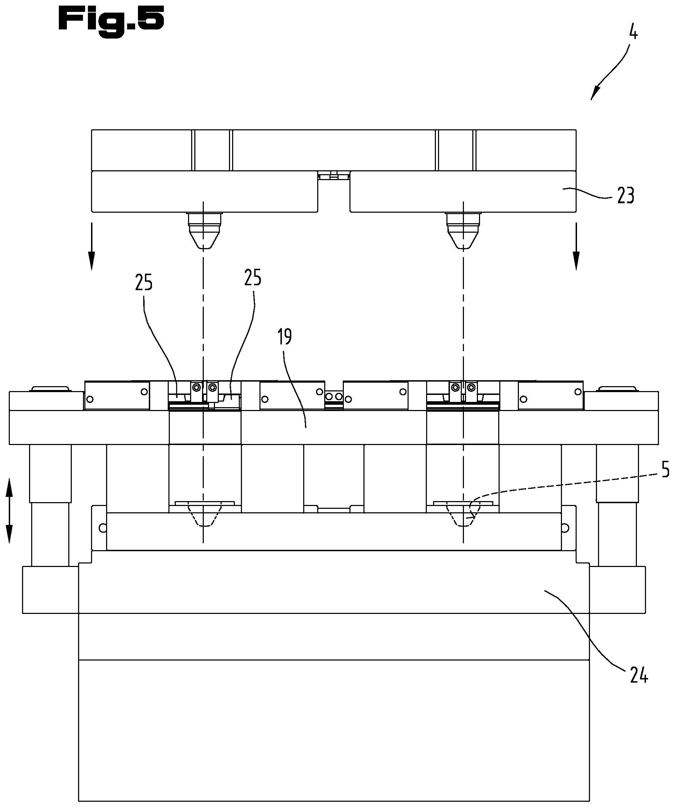

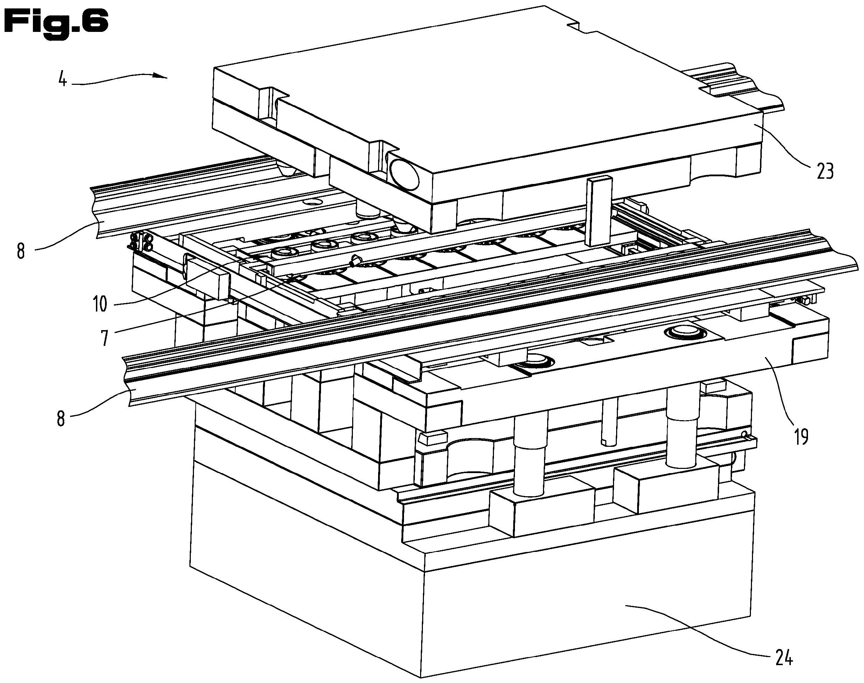

In den Fig. 1 bis 10 ist vereinfacht eine Anlage 1 zur Herstellung von Hohlkörpern 2 durch Spritzgießen und nachfolgendes Blasformen gezeigt. Bei dieser hier beschriebenen und gezeigten Ausführungsform erfolgt in einer ersten Station die Bildung zumindest eines Vorformlings 3 in einem Spritzgießwerkzeug 4, in welchem dafür mindestens eine Kavität 5 ausgebildet bzw. angeordnet ist. Der Vorformling 3 kann dabei aber auch als sogenannter Preform bezeichnet werden, welcher in einem an sich bekannten Spritzgussvorgang durch entsprechend aufgeweichtes und aufbereitetes Kunststoffmaterial mittels einer hier nicht näher dargestellten Extruderanlage dem Spritzgießwerkzeug 4 gebildet wird.

In einer weiteren Station der Anlage 1 erfolgt die Umformung des Vorformlings 3 hin zum Hohlkörper 2. Dabei erfolgt die endgültige Formgebung ebenfalls in einem an sich bekannten Umformprozess des Vorformlings 3 hin zum fertigen Hohlkörper 2. Diese weitere Station umfasst zumindest eine Blasform 6 mit dieser zusammenwirkenden und entsprechend ausgebildeten Antriebs- und Schießmitteln, wobei in der geschlossenen Blasform 6 die Umformung des Vorformlings 3 erfolgt. So kann diese Station auch als Endformstation bzw. Endformgebungsstation bezeichnet werden.

Der Transport des Vorformlings 3 ausgehend vom Spritzgießwerkzeug 4 hin zur Blasform 6 erfolgt hier mit einem eigenen Transfermittel 7, welches auf vereinfacht dargestellten Transportschienen 8 bevorzugt in geradliniger Bewegung zumindest zwischen dem Spritzgießwerkzeug 4 und der Blasform 6 hin und her bewegt wird. Eine durch das Transfermittel 7 im Zusammenwirken mit den Transportschienen 8 definierte Transportebene 41 ist dabei bevorzugt horizontal ausgerichtet.

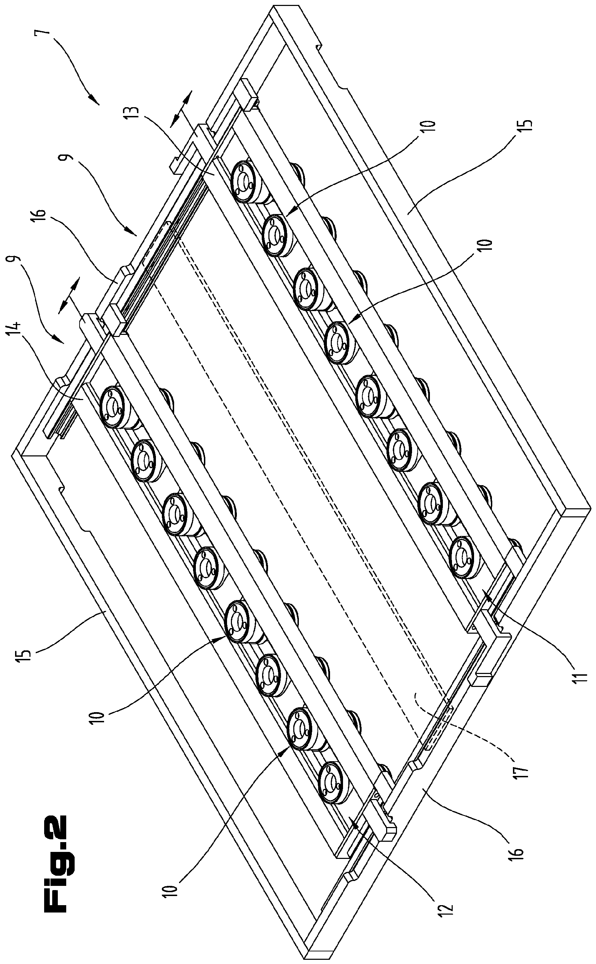

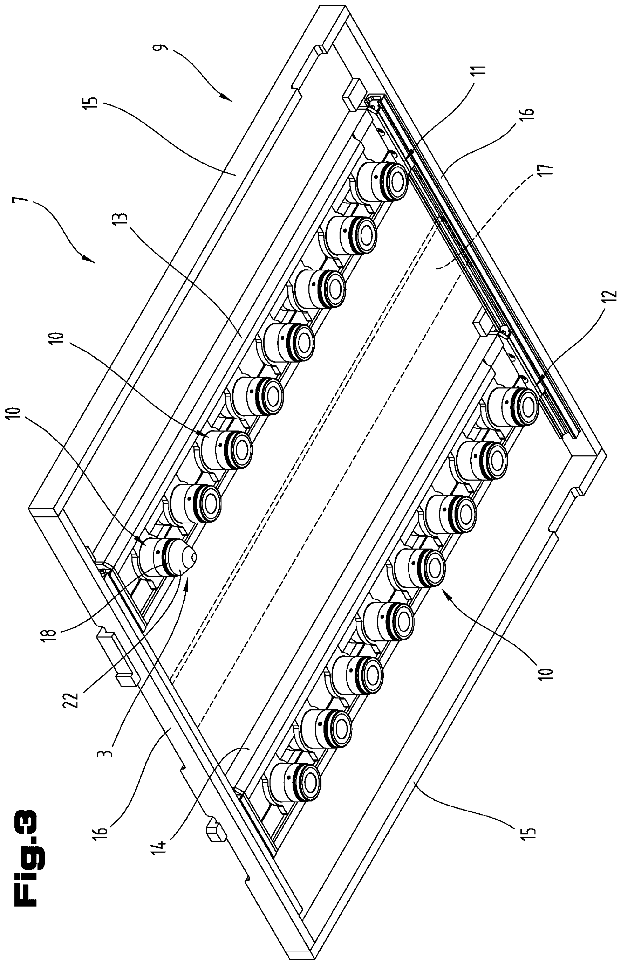

Wie nun besser aus den Fig. 2 und 3 zu ersehen ist, umfasst das Transfermittel 7 einen Tragrahmen 9, an welchem zumindest ein Halteorgan 10, gegebenenfalls unter Zwischenschaltung einer relativ dazu beweglichen Grundplatte 13, 14, für jeweils einen Vorformling 3 angeordnet ist. Dabei sei bemerkt, dass das Transfermittel 7 mit dem oder den Halteorganen 10 für sich alleinig eine eigenständige Erfindung ohne die weiteren Anlagenteile, wie das Spritzgießwerkzeug 4, die Blasform 6 darstellen kann. Die Aufgabe dabei kann darin gesehen werden, dass ein eigenständiges Transfermittel geschaffen werden soll, mit welchem der oder die Vorformlinge 3 einfach und sicher gehandhabt werden können. Dabei ist es vorteilhaft, wenn der am jeweiligen Halteorgan 10 an seiner Innenseite des Halsfortsatzes 18 gehaltene Vorformling 3 vom Spritzgießwerkzeug 4 übernommen wird und anschließend bis zur endgültigen Formgebung und dem weiteren Transport hin zu einer Abgabestation stets vom gleichen Halteorgan 10 durchgehend gehalten ist und die Formgebungs- und/oder Bearbeitungsvorgänge weiter unbehindert durchgeführt werden können. Damit wird ein eigenständiges Transfermittel 7 geschaffen, mit welchem an der gesamten Außenseite des Vorformlings 3 bis hin zum fertigen Hohlkörper 2 stets ein ungehinderter Zugang möglich ist.

Im vorliegenden Ausführungsbeispiel sind am Transfermittel 7 eine Vielzahl von Halteorganen 10 vorgesehen, die in Transportrichtung des Tragrahmens 9 zwischen dem Spritzgießwerkzeug 4 und der Blasform 6 gesehen, in einer ersten Halteorgangruppe 11 hintereinander angeordnet sind. Parallel zur ersten Halteorgangruppe 11 ist in Transportrichtung gesehen, eine weitere Halteorgangruppe 12 neben der ersten Halteorgangruppe 11 mit einer weiteren Vielzahl an Halteorganen 10 angeordnet. Die einzelnen Halteorgane 10 jeder der Halteorgangruppen 11, 12 sind jeweils an einer ersten bzw. weiteren Grundplatte 13, 14 angeordnet. Jede der Grundplatten 13, 14 ist relativ gegenüber dem Tragrahmen 9 in Querrichtung bezüglich der Transportrichtung des Tragrahmens 9 an diesem verstellbar gelagert. Dies ist vereinfacht für jede der Grundplatten 13, 14 durch eingetragene Pfeile dargestellt. Diese Querverstellung bzw. seitliche Verlagerung der einzelnen Halteorgane 10, insbesondere unter Zwischenschaltung der Grundplatten 13, 14 relativ gegenüber dem Tragrahmen 9, wird nachfolgend auch noch in Verbindung mit der Blasform 6 näher erläutert werden.

Die einfachste Ausführungsform wäre derart, dass am Tragrahmen 9 in Transportrichtung gesehen zwei oder mehrere Halteorgane 10 nebeneinander bzw. hintereinander an diesem angeordnet sind und jedes der Halteorgane 10 bevorzugt unabhängig voneinander in Querrichtung zur Transportrichtung in der Transportebene 41 verlagerbar ist. Je nach Anzahl sowie der Raumform der herzustellenden Vorformlinge 3 bzw. Hohlkörper 2 kann die Anzahl der Halteorgane 10 sowie der Halteorgangruppen 11, 12 frei gewählt werden.

Bei diesem hier gezeigten Ausführungsbeispiel ist der Tragrahmen 9 fensterartig ausgebildet und umfasst randlich angeordnete Längsstege 15 sowie die Längsstege 15 verbindende Querstege 16. Parallel zu den beiden Längsstegen 15 erstreckt sich zwischen den Querstegen 16 zumindest ein Verbindungssteg 17. Bei mehreren nebeneinander angeordneten Halteorgangruppen 11, 12 ist die Größe des Tragrahmens 9 entsprechend daran anzupassen, wobei hier auch mehrere Verbindungsstege 17 vorgesehen sein können. In den fensterartigen Aussparungen zwischen den einzelnen Stegen sind hier die beiden Grundplatten 13, 14 in senkrechter Richtung zur Längserstreckung der Längsstege 15 an den Querstegen 16 geführt gelagert. Damit ist die relative Verlagerung der einzelnen Halteorgane 10 relativ gegenüber dem Tragrahmen 9 möglich.

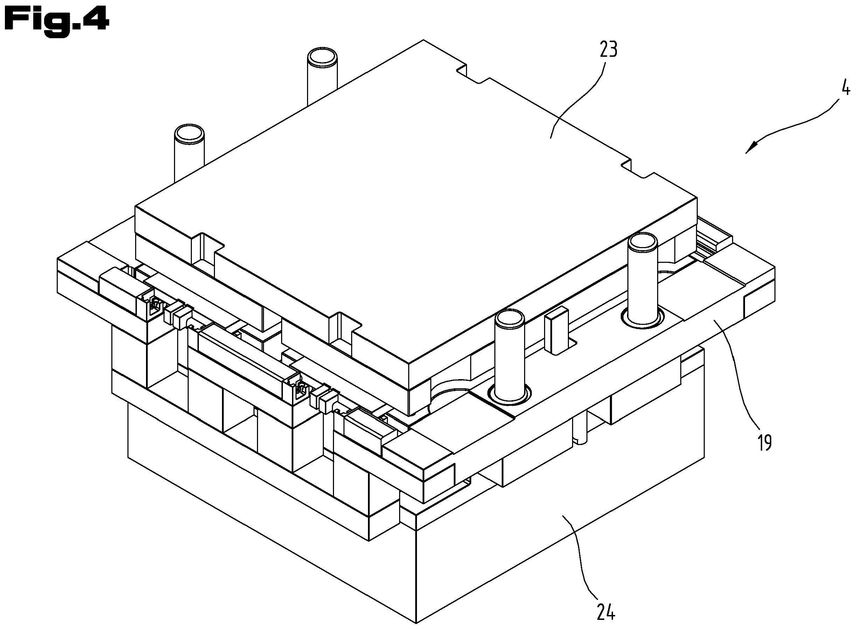

Wie nun besser aus den Fig. 4 bis 7 zu ersehen ist, ist das bzw. sind die am Transfermittel 7 angeordneten Halteorgane 10 derart ausgebildet, dass diese bei geöffnetem Spritzgießwerkzeug 4 und der dabei möglichen Übergabestellung des Vorformlings 3 hin zum Transfermittel 7 in den Innenraum des Halsfortsatzes 18 eingesetzt werden, während der Vorformling 3 noch an der Außenseite seines Halsfortsatzes 18 von einem Werkzeugteil 19 des Spritzgießwerkzeuges 4 gehaltenwird. Vorher ist noch im Anschluss an die Öffnungsbewegung des Spritzgießwerkzeuges 4 der Vorformling 3 mittels dieses Werkzeugteils 19 aus der Kavität 5 entnommen worden. Dabei bildet ein Teilabschnitt des Werkzeugteils 19 die Außenkontur des Vorformlings 3 im Bereich seines Halsfortsatzes 18 formgebend aus. Nach dem Öffnen des Spritzgießwerkzeuges 4 sowie dem Anheben bzw. Abheben des Vorformlings 3 aus der Kavität 5 und dessen Halterung im Bereich der Außenseite seines Kragens wird eine frei zugängliche Innenfläche 20 des Halsfortsatzes 18 geschaffen.

Bei einer vertikalen Öffnungsbewegung des Spritzgießwerkzeuges 4 sowie der ebenfalls vertikalen bzw. senkrechten Entnahme des Vorformlings 3 aus der Kavität 5 kann der bzw. können die Vorformlinge 3 an das Transfermittel 7, insbesondere dessen Halteorgane 10, übergeben werden. Zu diesem Zweck wird das Transfermittel 7 zwischen die geöffneten Spritzgießwerkzeugteile, wie Formhälften 23, 24, bewegt und in entsprechender Lage bezüglich der Kavitäten 5 positioniert angehalten. Durch das Anheben des Werkzeugteils 19 erfolgt das Aufsetzen bzw. Einsetzen des bzw. der Vorformlinge 3 auf das bzw. auf die Halteorgane 10. Die Übergabebewegung zwischen dem geöffneten Spritzgießwerkzeug 4, insbesondere der hier unten liegenden Formhälfte 24, und dem am Transfermittel 7 angeordneten Halteorgan 10 erfolgt in einer senkrecht zur Transportebene 42 ausgerichteten Verstellrichtung bzw. Transportrichtung. Dabei wird der Vorformling 3 mit dem Inneren seines Halsfortsatzes 18 auf das Halteorgan 10 aufgesetzt und so das Halteorgan 10 an der Innenfläche 20 des Halsfortsatzes 18 zur Anlage gebracht. Dabei stützt sich der Vorformling 3 mit seinem Halsfortsatz 18 am Halteorgan 10 ab. Damit erfolgt die Übergabe des Vorformlings 3 zwischen dem geöffneten Spritzgießwerkzeug 4 und dem Transfermittel 7, insbesondere dem oder den daran angeordneten Halteorganen 10. Eine durch den Halsfortsatz 18 definierte Längsachse 60 weist dabei eine bezüglich der Transportebene 41 dazu senkrechte Ausrichtung auf. Weiters weisen auch die im Spritzgießwerkzeug 4 sowie in der Blasform 6 angeordneten Kavitäten 5 bzw. Formhohlräume mit ihren Längsachsen bezüglich der Transportebene 41 eine dazu senkrechte Ausrichtung auf. Damit kann ein Wenden bzw. eine Lageänderung der Längsachse 60 des Halsfortsatzes 18 während des gesamten Herstellungsprozesses unterbleiben, wobei die Ausrichtung der Längsachse 60 bezüglich der Transportebene 41 stets gleich gerichtet ist.

Damit wird nach der gezielten Entnahme des Vorformlings 3 dieser an das Halteorgan 10 übergeben, wobei bei einem entsprechenden Haltesitz des Vorformlings 3 am Halteorgan 10 die Freigabe des Vorformlings 3 vom Werkzeugteil 19 erfolgt. Damit wird erreicht, dass von der zuerst außenseitigen Halterung des Halsfortsatzes 18 auf eine innenliegende Halterung am Transfermittel 7, insbesondere den Halteorganen 10, übergangen wird.

Um bei der später nachfolgenden weiteren Formgebung einen ausreichenden Freiraum im Bereich des Krageninneren zu erhalten, soll das Halteorgan 10 im Bereich seines Zentrums zumindest eine Freistellung aufweisen, um gegebenenfalls einen Streckdorn in den Innenraum des Vorformlings 3 hinein bewegen zu können und damit einen weiteren Schritt der Formgebung durchführen zu können. Deshalb ist es vorteilhaft, wenn das Halteorgan 10 mehrere über seinen Außenumfang verteilt angeordnete Haltearme 21 umfasst.

Bei derartig hergestellten Hohlkörpern 2 ist es üblich, den als Kupplungsstück ausgebildeten Haltefortsatz 18 in seiner endgültigen Form bereits im Zuge des Spritzgießvorganges auszubilden und erst anschließend daran aus einem an den Halsfortsatz 18 anschließenden Hohlkörperteil 22 im Zuge des Blasvorganges die endgültige Raumform des Hohlkörpers 2 auszubilden.

Wesentlich ist hier, dass im Bereich des Transfermittels 7 die Halterung des Vorformlings 3 im Bereich der Innenseite des Halsfortsatzes 18 erfolgt. Dies wird durch die Übergabe vom Werkzeugteil 19 hin auf das Transfermittel 7 erzielt, wobei dann auch noch während des nachfolgend beschriebenen Blasvorganges die innenliegende Halterung des Vorformlings 3 am Transfermittel 7 beibehalten wird.

Um eine gute Halterung bzw. Klemmwirkung für den Vorformling 3 am Halteorgan 10 zu erzielen, sollen die Haltearme 21 in einer außerhalb des Vorformlings 3 befindlichen Stellung eine größere Außenabmessung aufweisen als der die Haltearme 21 aufnehmende, innere Querschnitt des Halsfortsatzes 18. Dabei sollen die Haltearme 21 elastisch verformbar und/oder radial verstellbar ausgebildet sein.

Je nach gewähltem Querschnitt des Halsfortsatzes 18 ist in Abhängigkeit davon auch das Halteorgan 10 mit den gegebenenfalls daran angeordneten Haltearmen 21 auszubilden. Zumeist wird der Halsfortsatz 18 mit einem runden, rohrförmigen Querschnitt ausgebildet, um so die Öffnung des Hohlkörpers 2 mit einem nicht näher dargestellten Verschlusselement einfach verschließbar zu machen. Dabei kann es sich um Deckel, Schraubverschlüsse, Kronenkorken oder dergleichen handeln.

Wie bereits zuvor beschrieben, ist das Halteorgan 10 in seiner einfachsten Ausführungsform quer bezüglich der Transportrichtung des Tragrahmens 9 zwischen dem Spritzgießwerkzeug 4 und der Blasform 6 gesehen, relativ gegenüber dem Tragrahmen 9 verstellbar an diesem gelagert. Dies wäre die minimalste Ausbildung und Anordnung eines Halteorgans 10 am Tragrahmen 9 des Transfermittels 7. Bevorzugt wird jedoch eine Mehrfachanordnung von Halteorganen 10 in den zuvor beschriebenen und gezeigten Halteorgangruppen 11, 12 gewählt.

Die entsprechende Lager- und Führungsanordnung zur Querbewegung der einzelnen Halteorgangruppen 11, 12 ist am besten aus der Fig. 2 und 3 zu ersehen, wobei die Querverlagerung der Halteorgangruppen 11, 12, insbesondere der Grundplatten 13, 14, relativ gegenüber dem Tragrahmen 9 selbsttätig im Zuge von Werkzeugbewegungen und/oder aber auch gesteuert über nicht näher beschriebene Antriebsmittel erfolgen kann.

Der Tragrahmen 9 wird zumeist mittels einer Führungsanordnung in einer geradlinigen Transportbewegung zwischen dem Spritzgießwerkzeug 4 und der Blasform 6 geführt. Dazu können die zuvor beschriebenen Transportschienen 8 dienen.

Bei geschlossenem Spritzgießwerkzeug 4 ist der Werkzeugteil 19 zur Formgebung des Halsfortsatzes 18 zwischen den Formhälften 23, 24 des Spritzgießwerkezuges 4 angeordnet, wobei der Werkzeugteil 19 in senkrechter Richtung bezüglich einer Teilungsebene zwischen den Formhälften 23, 24 verstellbar geführt, gelagert ist. Um eine Freigabe des Vorformlings 3 hin zum Halteorgan 10 zu ermöglichen, ist es notwendig, jeden einzelnen, zur Formgebung des Halsfortsatzes 18 dienenden Formabschnitt des Werkzeugteils 19 über den Umfang des Halsfortsatzes 18 gesehen, geteilt auszuführen. Dazu können einzelne Werkzeugteilsegmente 25 vorgesehen, welche verstellbar relativ gegenüber dem Werkzeugteil 19 gelagert sind. Diese Freigabebewegung kann entweder durch eine Art Kipphebelbewegung oder aber auch eine Verstellbewegung in paralleler Richtung bezüglich der Teilungsebene der Formhälften 23, 24 erfolgen.

Bevorzugt werden die einzelnen Werkzeugteilsegmente 25 ebenfalls in Transportrichtung gesehen geteilt ausgebildet, wodurch mit einer einfachen seitlichen Querverlagerung nach der Übergabe der Vorformlinge 3 an die Halteorgane 10 die Freigabe einfach erfolgen kann. Durch eine der Kavität 5 zugewendete bevorzugte kegelstumpfförmige Verjüngung der Werkzeugteilsegmente 25 kann nicht nur eine Selbstzentrierung derselben relativ bezüglich einer der Formhälften 23, 24 erfolgen, sondern bei einer diametralen Teilung der Werkzeugteilsegmente 25 auch das Aneinanderliegen und Schließen der Werkzeugteilsegmente 25 zur vollständigen Ausbildung des Halsfortsatzes 18 bewirken.

Bei diesem hier gewählten Herstellvorgang des Hohlkörpers 2 wird der im Spritzgießwerkzeug 4 hergestellte Vorformling 3 nicht merklich abgekühlt, um nach dem Transport des Vorformlings 3 hin zur Blasform 6, gegebenenfalls ohne weiterer Energie- bzw. Wärmezufuhr, den Blasvorgang hin zum fertigen Hohlkörper 2 durchführen zu können. Falls notwendig, kann dem Vorformling 3, insbesondere dessen Hohlkörperteil 22, noch vor dem Beginn des Blasvorganges eine zusätzliche ausreichende bzw. entsprechende Wärmemenge zugeführt werden, um die Verformbarkeit des umzuformenden Hohlkörperteils 22 gewährleisten zu können. Dies ist vom gewählten Verfahrensablauf bzw. der herzustellenden Geometrie des Hohlkörpers 2 abhängig und kann frei gewählt werden.

Im vorliegenden Ausführungsbeispiel soll jedoch versucht werden, ohne zusätzlicher Einbringung von Wärmeenergie den Vorformling 3 direkt aus dem Spritzgießwerkzeug 4 mittels des Werkzeugteils 19 zu entnehmen und an das Halteorgan 10 des Transfermittels 7 zu übergeben. Unmittelbar anschließend erfolgt der Weitertransport hin zur weiteren Station, nämlich der Formgebungsstation mit der Blasform 6. In der Blasform 6 wird die endgültige Formgebung hin zum Hohlkörper 2 durchgeführt.

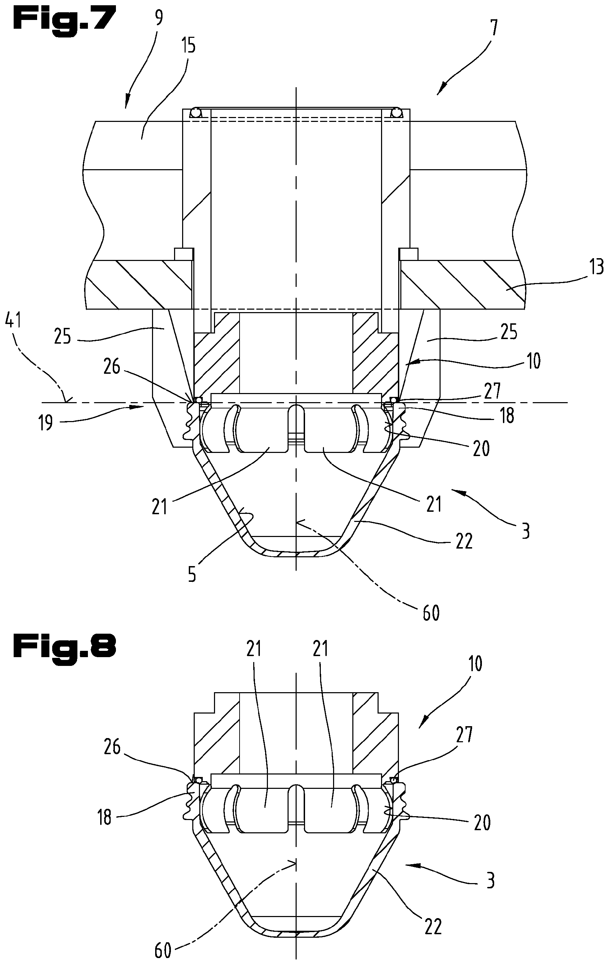

Wie nun aus einer Zusammenschau der Fig. 7 und 8 zu ersehen ist, ist hier jene Position gezeigt, in welcher der Vorformling 3 an das Halteorgan 10 des Transfermittels 7 übergeben worden ist und am Halteorgan 10 mit seiner Innenfläche 20 zur Anlage gebracht worden ist. Bei diesem hier gezeigten Ausführungsbeispiel umfasst das Halteorgan 10 mehrere über den Umfang verteilt angeordnete Haltearme 21, welche eine ausreichende Klemmwirkung für den daran zu halternden Vorformling 3 erzeugen. Durch die randlich bombierte Ausführung der einzelnen Haltearme 21 sowie der umfangsmäßigen Beabstandung derselben voneinander, wird hier auch bei geringfügigen Abweichungen von der Querschnittsabmessung des Halsfortsatzes 18 stets eine ausreichende Haltekraft für den Transportvorgang erzielt. Die einzelnen Haltearme 21 sind mit ersten Enden auf der vom Hohlkörperteil 22 abgewendeten Seite umfangsmäßig gesehen als Teil des Halteorgans 10 dort ortsfest angeordnet. Das weitere Ende jedes Haltearms 21 ist nicht fest eingespannt bzw. ortsfest am Halteorgan 10 angeordnet und somit in gewissen Grenzen frei beweglich.

Durch die Haltearme 21 wird die Möglichkeit geschaffen, im Bereich des Halteorgans 10 eine individuelle Halterung bzw. Klemmung der daran zu halternden Vorformlinge bzw. Hohlkörper sicherzustellen. Durch die mehrfach angeordneten Haltearme 10 kann eine zentrische Positionierung des Vorformlings 3 bzw. Hohlkörpers 2 relativ gegenüber dem Halteorgan 10 erzielt werden. Dadurch lässt sich aber auch eine bessere Positionierung der umzuformenden Vorformlinge 3 im Bereich der Blasform 6 erzielen.

Aufgrund der der Haltearme 21 innenwohnenden Elastizität können auch geringfügige Toleranzen ausgeglichen werden und trotzdem kann eine einwandfreie Halterung bzw. Positionierung der Vorformlinge 3 bzw. Hohlkörper 2 am Halteorgan 10 erfolgen.

Zusätzlich ist es noch möglich, im Bereich einer Stirnfläche 26 des Halsfortsatzes 18 am Halteorgan 10 ein Dichtelement 27 vorzusehen, um so für den Blasvorgang eine dichtende Anlage der Stirnfläche 26 an einem Halteabschnitt des Halteorgans 10 zu erzielen. Damit wird verhindert, dass die zum Ausformen notwendige Blasluft aus dem Innenraum des herzustellenden Hohlkörpers 2 entweichen kann. Das hier beschriebenen und dargestellte Dichtelement 27 ist als O-Ring ausgebildet.

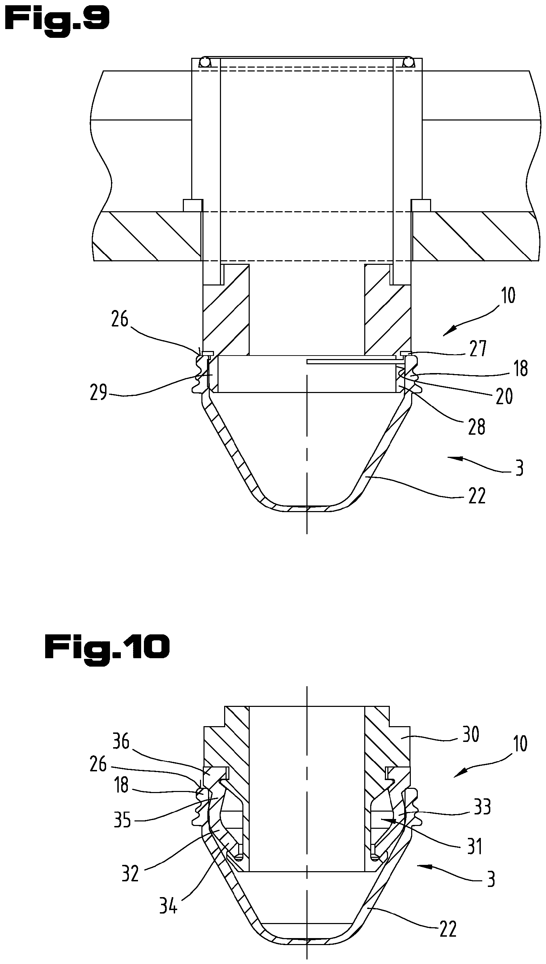

In der Fig. 9 ist eine weitere mögliche und gegebenenfalls für sich eigenständige Ausbildung eines Halteorgans 10 gezeigt, wobei wiederum für gleiche Teile gleiche Bezugszeichen bzw. Bauteilbezeichnungen wie in den vorangegangenen Fig. 1 bis 8 verwendet werden. Um unnötige Wiederholungen zu vermeiden, wird auf die detaillierte Beschreibung in den vorangegangenen Fig. 1 bis 8 hingewiesen bzw. Bezug genommen.

Das hier vergrößert dargestellte Halteorgan 10 für die Aufnahme des Vorformlings 3 umfasst zumindest einen bogenförmig ausgebildeten Haltearm 28, der in Form eines Rohrsegmentes ausgebildet ist. Ein weiterer Teilabschnitt des Halteorgans 10 ist hingegen als feststehender Halteteil 29 ausgebildet, der ebenfalls eine rohrsegmentförmige Raumform aufweist. Mit diesem feststehend ausgebildeten Halteteil 29 ist der zuvor beschriebene Haltearm 28 verbunden, wobei bevorzugt eine einstückige Ausbildung gewählt wird. Der Haltearm ist wiederum als Federelement ausgebildet, um die notwendige Haltekraft aufbauen zu können. Diese Ausbildung kann beispielsweise dadurch erreicht werden, dass zuerst ein umlaufender Halteteil 29 im Bereich des Halteorgans 10 ausgebildet wird und anschließend eine teilweise Auftrennung des Halteteils 29 zur Ausbildung zumindest eines Haltearms 28 erfolgt. Dies kann durch entsprechend ausgerichtete Trennschnitte sowie nachfolgende Verformung und/oder Bearbeitung erfolgen.

Im Bereich der Stirnfläche 26 des Vorformlings 3 kann auch hier wiederum zur dichtenden Anlage des Vorformlings 3 am Halteorgan 10 das zuvor beschrieben Dichtelement 27 vorgesehen sein. Im Gegensatz zu der in den Fig. 7 und 8 beschriebenen Ausführungsform wird hier ein kreisringförmig ausgebildetes flächiges Dichtelement 27 verwendet.

In der Fig. 10 ist eine weitere und gegebenenfalls für sich eigenständige Ausbildung eines Halteorgans 10 für das Transfermittel 7 gezeigt, wobei wiederum, um unnötige Wiederholungen zu vermeiden, auf die detaillierte Beschreibung in den vorangegangenen Fig. 1 bis 9 hingewiesen bzw. Bezug genommen wird. Gleichfalls werden wiederum für gleiche Teile gleiche Bezugszeichen bzw. Bauteilbezeichnungen wie in den vorangegangenen Fig. 1 bis 9 verwendet.

Bei dieser hier gezeigten Ausführungsform ist ein Teilabschnitt des Halteorgans 10 als rohrförmiger Bauteil 30 ausgebildet und weist auf seiner Außenseite eine Aufnahme 31 zum Einsetzten eines Halteelements 32 auf. Dieses Halteelement 32 kann entweder aus einem umfänglich durchlaufenden, einstückigen Bauteil gebildet sein, dessen Werkstoff elastisch verformbare Eigenschaften aufweist. So ist es möglich, das Halteelement 32 auf den rohrförmigen Bauteil 30 des Halteorgans 10 aufzusetzen und in die dafür vorgesehene Aufnahme 31 einzusetzen und so zu haltern. Im Querschnitt gesehen bildet dann das Halteelement 32 wiederum einen Haltearm 33 aus. Dieser ist im vorliegenden Ausführungsbeispiel rundum durchlaufend ausgebildet.

Unabhängig davon wäre es aber auch möglich, das Halteelement 32 in einer umfänglich geteilten Ausführung auszubilden, bei welcher zumindest ein axial verlaufender Trennbereich bzw. Trennabschnitt in Form einer Materialtrennung vorgesehen ist, in welchem das Halteelement 32 umfangsmäßig gesehen geteilt ist. Weiters wäre es aber auch noch möglich, das Halteelement 32 durch mehrere einzelne Segmentteile auszubilden, welche in die Aufnahme 31 eingesetzt werden können.

Durch die der Innenfläche 20 zugewendete und im Axialschnitt gesehen bombierte Außenform des Halteelement 32 wird wiederum die gewünschte Anlage des oder der durch das Halteelement 32 gebildeten Haltearme 33 an der Innenfläche 20 des Halsfortsatzes 18 erzielt.

Betrachtet man nun das Halteelement 32 mit seinem oder seinen Haltearmen 33 im Axialschnitt, so sind beidseits des Anlagebereichs bzw. Stützbereichs an der Innenseite 20 des Halsfortsatzes 18 Schenkel 34, 35 ausgebildet, welche jeweils auf voneinander abgewendeten Seiten hin auf das Zentrum des Halteorgans 10 gerichtet verlaufen. Durch einen gegenläufig ausgebildeten Vorsprung des Halteelements 32 im Bereich der Stirnfläche 26 des Vorformlings 3 wird eine Schulter 36 ausgebildet, an welcher sich zumindest ein Teilabschnitt der Stirnfläche 26, insbesondere ein Übergangsbereich von der Innenfläche 20 des Halsfortsatzes 18 hin zur Stirnfläche 26 abstützt. Ist das Halteelement 32 wiederum aus einem elastisch verformbaren Werkstoff gebildet, kann hier in diesem Bereich die gewünschte Abdichtung des Innenraums des Vorformlings 3 für den Blasvorgang erzielt werden.

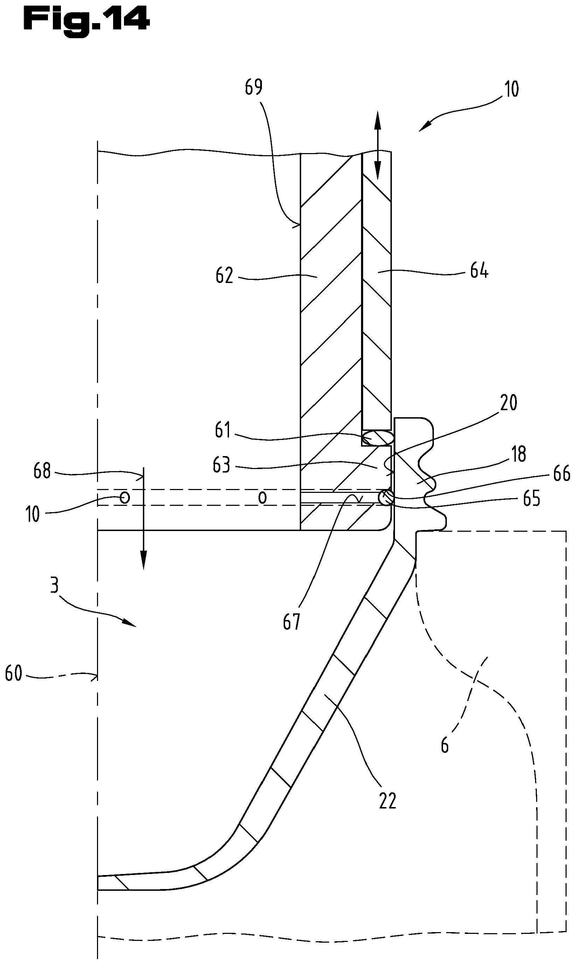

Unabhängig davon wäre auch eine für sich eigenständige Ausbildung eines Halteorgans 10 des Transfermittels 7 möglich, bei welcher das Halteorgan 10 an seiner dem Halsfortsatz 18 zugewendeten Außenfläche ein eigenes Halteelement 61 umfasst, welches zwischen einer Freigabestellung und einer Klemmstellung verstellbar ausgebildet ist, wie dies nachfolgend in der Fig. 14 noch näher gezeigt und beschrieben wird. Dies kann beispielsweise dadurch erfolgen, dass am rohrförmigen Bauteil 30 des Halteorgans 10 das elastisch verformbar ausgebildete Halteelement 61 angeordnet ist und mittels eines Druckmittels zwischen den beiden Stellungen verstellt werden kann. Dabei kann das Halteelement 61 entweder über den gesamten Umfang durchlaufend und/oder aber auch nur über Teilumfänge des Halteorgans 10 angeordnet sein. Wird ein im rohrförmigen Bauteil 30 ausgebildeter und dem Halteelement 61 zugeordneter bzw. dahinter angeordneter Kanal mit dem Druckmittel beaufschlagt, kommt es zu einer radialen Verformung des Halteelements 61 und damit verbunden einer Vergrößerung des Außenumfanges. Dadurch kommt das oder kommen die Halteelemente 61 zur Anlage an der Innenfläche 20 des Halsfortsatzes 18 und es erfolgt die gewünschte Halterung bzw. Klemmung des Vorformlings 3.

Das Halteorgan 10 mit seinem variablen elastischen Element kann mit seiner zuerst kleineren Querschnittsabmessung in den Halsfortsatz 18 eingesetzt werden. Anschließend daran wird das elastische Element beispielsweise durch ein Druckmittel, wie Hydrauliköl, pneumatische Druckmedien, radial aufgeweitet und zur Anlage an der Innenfläche 20 gebracht. Damit erfolgt die halternde Wirkung des Vorformlings 3 und später daraus hergestellten Hohlkörpers 2.

Weiters wäre es bei den zuvor beschriebenen Halteorganen 10 noch möglich, dass dieses mit einem eigenen Temperiermittelkanal, insbesondere einem Kühlmittelkanal versehen ist, welcher über Zu- und Ableitungen mit einem Versorgungssystem in Strömungsverbindung steht. Damit wird es möglich, den Vorformling 3 bereits unmittelbar nach der Übernahme vom Werkzeugteil 19 zumindest im Bereich seines Halsfortsatzes 18 zu temperieren, insbesondere Wärmeenergie abzuführen.

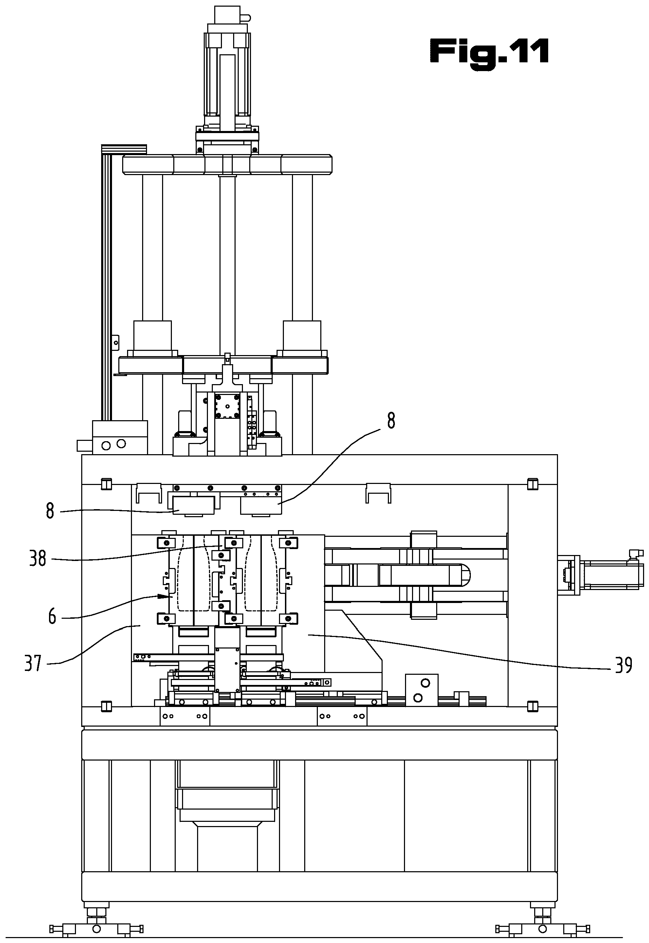

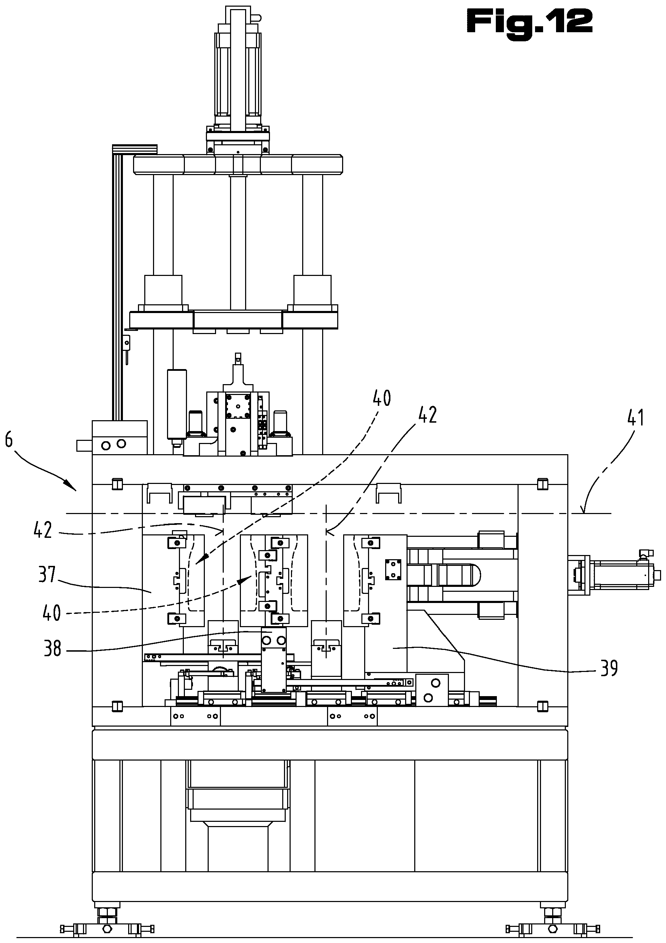

In den Fig. 11 und 12 ist die Blasstation mit der Blasform 6 gezeigt, in welcher die vom Spritzgießwerkzeug 4 übernommenen Vorformlinge 3 nach dem Schließen der Blasform 6 hin zum fertigen Hohlkörper 2 umgeformt werden.

So ist in der Fig. 12 eine geöffnete Stellung und in der Fig. 11 die geschlossene Stellung der Blasform 6 gezeigt, die ihrerseits aus mehreren in Transportrichtung gesehen nebeneinander angeordneten Blasformteilen 37 bis 39 gebildet ist. Da bei dem hier gezeigten Ausführungsbeispiel durch das Transfermittel 7 zwei nebeneinander angeordnete Reihen aus Vorformlingen 3 im Spritzgießwerkzeug 4 hergestellt werden, ist auch im Bereich der Blasform 6 eine dazu korrespondierende Anzahl sowie Anordnung von Kavitäten vorzusehen.

Als Minimumanzahl umfasst die Blasform 6 zwei derartiger Blasformteile 37, 38.

Wie bereits zuvor beschrieben werden die Vorformlinge 3 unmittelbar nach deren Herstellung vom gemeinsamen Transfermittel 7 aufgenommen und zur Blasform 6 bewegt und dort in die geöffnete Blasform 6 für den Blasvorgang eingesetzt. Nach dem Schließen der Blasformteile 37 bis 39 erfolgt weiterhin die Halterung der einzelnen Vorformlinge 3 durch die diesen zugeordneten Halteorganen 10. Dadurch, dass bei dieser Ausführungsform die Halterung der einzelnen Vorformlinge 3 im Bereich der Innenseite bzw. Innenfläche 20 des Halsfortsatzes 18 erfolgt, kann auch während des Blasvorganges ein einfaches Schließen der Blasform 6 erfolgen, indem der Halsfortsatz 18 mit seiner Außenseite in der dafür vorgesehenen Kavität 40 der Blasform 6 aufgenommen und gehalten ist. Nachfolgend an das Schließen der Blasform 6 wird in bekannter Weise in den Innenraum des Hohlkörpers 22 durch den zuvor beschriebenen, rohrförmigen Bauteil 30 des Halteorgans 10 das bzw. die weiteren formgebenden Mittel eingebracht. Dies kann je nach Art der gewünschten Formgebung ein Streckstempel sein, der eine axiale Verstreckung und damit Vergrößerung in axialer Richtung des Vorformlings 3 bewirkt. Anschließend daran wird mit einem Druckmittel in gasförmiger und/oder flüssiger Form der Endformvorgang durchgeführt. Zumeist erfolgt dies mit Druckluft.

Der Antrieb der Streckstempel erfolgt bei dieser Ausführungsform mit einem Servoantrieb, um eine bessere und genauere Bewegung der Streckstempel durchführen zu können. Dabei kann so vorgegangen werden, dass zuerst der Hohlkörperteil 22 durch den Streckstempel in axialer Richtung gedehnt wird, wobei hier ein Ausmaß erreicht werden kann, welches länger ist als der fertige Hohlkörper 2 in axialer Richtung. Dazu ist ein den Boden ausbildender Formeinsatz ebenfalls in axialer Richtung um ein entsprechendes Ausmaß aus der Kavität zu verlagern, um diese Streckbewegung zu ermöglichen. Der Streckstempel verformt das Material soweit, bis dass das vorbestimmte Ausmaß erreicht worden ist. Dann wird der den Boden ausbildende Formeinsatz wieder hin in Richtung auf den Halsfortsatz verlagert, wobei dabei darauf geachtet wird, dass der Streckstempel mit seiner Stirnfläche mit einem voreinstellbaren Widerstand unter Klemmung der Bodenwand des Hohlkörpers 2 an dem den Boden ausbildenden Formeinsatz abgestützt ist bzw. durch diesen Formeinsatz zurückverlagert wird. Damit wird eine Zentrierung des Bodens bezüglich der Längsachse erzielt. Während diesem Vorgang kann bereits der Blasvorgang eingeleitet worden sein, um so eine stärkere bzw. dickere Bodenwandstärke zu erzielen.

Ist nun der Endformvorgang durchgeführt und eine entsprechende Abkühlung des Hohlkörpers 2 erfolgt, kann die Blasform 6 geöffnet werden. Dies ist aus der Darstellung der Fig. 11 zu ersehen. Da der fertig ausgebildete Hohlkörper 2 im Gegensatz zu dem Vorformling 3 eine dazu größere Querschnittsabmessung aufweisen kann, ist eine entsprechende Öffnungsbewegung der Blasform 6 vorzusehen. Im vorliegenden Ausführungsbeispiel ist der links dargestellte Blasformteil 37 an einem Grundrahmen feststehend gehalten, wobei hingegen die weiteren Blasformteile 37 und 38 relativ gegenüber dem feststehenden Blasformteil 37 in Querrichtung zur Transportrichtung zumeist in einer horizontalen Ebene verlagert werden. Dies erfolgt durch entsprechende Stellmittel, um die notwendige Öffnungsbewegung sicherstellen zu können. Dabei kann dies über eine mechanische Kopplung erfolgen und in an sich bekannter Weise als Etagenwerkzeug ausgebildet sein.

Durch die seitliche Öffnungsbewegung der hier bezüglich des ortsfesten Blasformteils 37 dazu verstellbaren Blasformteile 38, 39 ist für die Entformung der nun fertigen Hohlkörper 2 ebenfalls eine ausreichende Querverlagerungsmöglichkeit derselben gemeinsam mit dem Halteorgan 10 am Tragrahmen 9 zu gewährleisten. Die Öffnung- und Schließbewegung der beweglichen Blasformteile 38, 39 erfolgt über einen Kniehebelantrieb. Die seitliche Querverlagerung der Halteorgane 10 wurde bereits zuvor näher beschrieben. Damit wird es möglich, das Transfermittel 7 mit seinem Tragrahmen 9 in einer geradlinigen Bewegung in Transportrichtung, ausgehend vom Spritzgießwerkzeug 4 hin zur Blasform 6 und aus dieser weiter zu einer weiteren Station, beispielsweise einer Abgabestation und/oder Prüfstation durchführen zu können.

Durch die relative Querverlagerung der einzelnen Halteorgane 10, gegebenenfalls unter Zwischenschaltung der Grundplatten 13, 14, wird es nun auf einfache Art und Weise möglich, bei einer geradlinigen Transportbewegung des Transfermittels 7 trotzdem im Bereich der sich seitlich öffnenden Blasformteile 38, 39 der Blasform 6 die Entformung der fertigen Hohlkörper 2 durchführen zu können. Das zuvor beschriebene Transfermittel 7 wird bevorzugt in einer horizontal ausgerichteten Transportebene 41 zwischen den einzelnen Stationen der Anlage 1 geführt. Die Transportrichtung des Transfermittels 7 vom Spritzgießwerkzeug 4 hin zur Blasform 6 stellt eine weitere, bevorzugt geradlinige Raumrichtung dar. Die Blasform 6 mit ihren Blasformteilen 37 bis 39 ist dann in Transportrichtung des Transfermittels gesehen, in einer vertikal ausgerichteten Teilungsebene 42 teilbar. Die einzelnen Blasformteile 38 und 39 sind dabei in einer parallel zur Transportebene 41 ausgerichteten Ebene sowie in senkrechter Richtung bezüglich der Teilungsebene 42 relativ zueinander verstellbar an einem Grundrahmen geführt. Dabei ist der Verstellweg des äußersten Blasformteils 39 bezüglich des feststehenden Blasformteils 37 größer als der Verstellweg des ersten beweglichen Blasformteils 38. So kann der Verstellweg des äußersten Blasformteils 39 in etwa das Doppelte betragen als der Verstellweg des ersten beweglichen Blasformteils 38.

Nach dem Öffnen der Blasform 6 mit ihren Blasformteilen 37 bis 39 und dem seitlichen Versatz der Halteorgane 10 relativ bezüglich des Tragrahmens 9 kann ausgehend von der Blasform 6 der ungehinderte Weitertransport und die Abgabe der endgültig hergestellten Hohlkörper 2 nachfolgend erfolgen. Diese Abgabe erfolgt zumeist auf eine Transportvorrichtung, wie ein Transportband oder dgl., mit welcher die einzelnen Hohlkörper 2 zu einem Lager und/oder aber auch zu einer unmittelbar nachgeschalteten Prüfstation weiter bewegt werden. In dieser nachfolgenden Prüfstation ist es möglich, beispielsweise eine Qualitätsermittlung durchzuführen, bei welcher Ist-Merkmale an den Hohlkörpern 2 erhoben werden und nach der Ermittlung der Ist-Merkmale diese mit vorgegebenen Soll- bzw. Qualitätsmerkmalen vergleichen werden. Diese Merkmale können beispielsweise die Dichtheit, Rissfreiheit, Wandstärkenverteilung usw. des hergestellten Hohlkörpers 2 betreffen. Findet keine Übereinstimmung bzw. zu große Abweichung vom Sollwert statt, wird der Hohlkörper 2 ausgeschieden.

Dabei sei erwähnt, dass auch die Blasform 6 bzw. aber auch die gesamte Blasstation gegebenenfalls für sich eigenständig eine für sich unabhängige Ausführungsform der Erfindung darstellen kann. Dabei kann die Aufgabe der Erfindung darin gesehen werden, eine Blasform 6 zu schaffen, mit der es möglich ist, eine einfache Entformung der damit hergestellten Hohlkörper 2 durchführen zu können. Dadurch, dass ein Blasformteil 37 seitlich feststehend an einem Grundrahmen gehalten ist und die weiteren Blasformteile 38 und 39 in seitlicher Richtung bezüglich der Transportrichtung des Transfermittels 7 verlagert werden können, ist bei Beibehaltung der geradlinigen Transportrichtung ein relativer Versatz der am Tragrahmen 9 über die Halteorgane 10 gehaltenen Hohlkörper 2 zu ermöglichen. Damit wird im Bereich der Blasform 6 eine geradlinige Ausbildung der Führungsorgane für das Transfermittel ermöglicht.

Bevorzugt jedoch wird jedoch die Blasform 6 in Verbindung mit den zuvor beschriebenen Anlagenteilen zur Anlage 1 komplettiert.

Der Verfahrensablauf zur Herstellung des oder der Hohlkörper 2 aus dem im Spritzguss hergestellten Vorformling 3 erfolgt dermaßen, dass in entsprechender Anzahl und gegenseitiger Ausrichtung im Spritzgießwerkzeug 4 der oder die Vorformlinge 3 gespritzt werden. In einem umformbaren Zustand des Werkstoffes werden die Vorformlinge 3 mittels des Werkzeugteils 19 aus der Kavität 5 entnommen und an das Transfermittel 7 übergeben. Diese Entnahme erfolgt bei geöffnetem Spritzgießwerkzeug, in dem das Transfermittel 7 zwischen die geöffneten Formhälften 23, 24 hineinverlagert wird.

Nach der halternden Übernahme der Vorformlinge 3 werden diese gemeinsam hin zur Blasstation mit deren geöffneten Blasform 6 transportiert. Während diesem Transportvorgang kann das Spritzgießwerkzeug 4 mit den Formhälften 23, 24 sowie dem Werkzeugteil 19 geschlossen werden und ein erneuter Spritzvorgang durchgeführt werden.

Gleichzeitig dabei findet im Bereich der Blasstation in der geschlossenen Stellung der Blasform 6 die Endformgebung hin zum Hohlkörper 2 statt. Nach der erfolgten Formgebung wird die Blasform 6 durch die seitliche Verlagerung der Blasformteile 38, 39 geöffnet und die fertigen Hohlkörper 2 aus der bzw. den Kavitäten 40 durch die ebenfalls seitliche Verlagerung der Halteorgane 10 relativ gegenüber dem Tragrahmen 9 von der Blasform 6 freigegeben. Anschließend darin erfolgt der Weitertransport zu einer Abgabe und/oder Prüfstation. Nach dieser Abgabe bzw. Übergabe zur Prüfstation wird das Transfermittel 7 durch die Blasstation hindurch zum Spritzgießwerkzeug 4 bewegt, in welchem in der Zwischenzeit bereits erneut Vorformlinge 3 gespritzt worden sind. Dann beginnt der zyklische Ablauf von neuem.

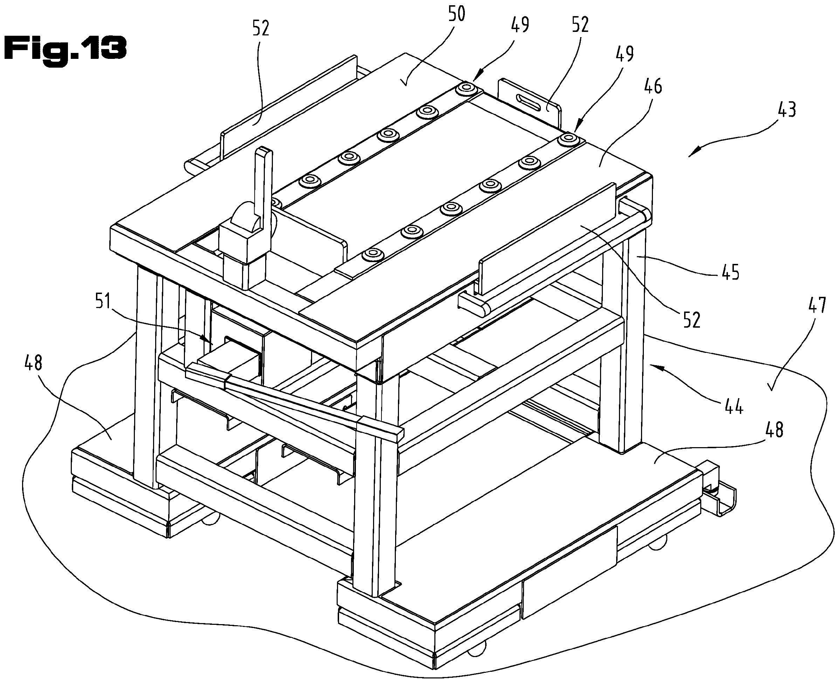

In der Fig. 13 ist eine gegebenenfalls für sich eigenständige Ausbildung einer Montagehilfseinrichtung 43 in Form eines Transportwagens 44 gezeigt, mit welcher die zuvor beschriebenen Formhälften 23, 24 des Spritzgießwerkzeuges 4 in die Anlage 1 eingesetzt und wieder entnommen werden können. Diese Hilfseinrichtung bzw. Hilfsvorrichtung kommt dann zum Einsatz, wenn mit üblicher Weise verwendeten Krananlagen der Zugang nicht mehr möglich ist. Dies ist hier der Fall, da die größeren Formhälften 23, 24 zueinander gesehen in einer Position übereinander angeordnet sind. Dabei kann die Aufgabe der Erfindung darin gesehen werden, die Montage von einzelnen Komponenten, wie Formteile oder Formhälften 23, 24 des Spritzgießwerkzeuges 4 einfach und sicher in die Anlage 1 einzubringen bzw. wieder daraus entnehmen zu können.

Der Transportwagen 44 der Montagehilfseinrichtung 43 umfasst einen Grundrahmen 45, der an seiner Oberseite eine Tragplatte 46 trägt. Im Bereich einer Aufstandsfläche 47, wie zum Beispiel einem ebenen Hallenboden oder dergleichen, sind Stützelemente 48 zur Abstützung des Grundrahmens 45 an der Aufstandsfläche 47 vorgesehen. Der Grundrahmen 45 kann ein Tragwerk mit mehreren untereinander verbundenen Stehern sowie Streben umfassen, welche an das aufzunehmende Gewicht bzw. die Masse der Teile des Spritzgießwerkzeuges 4 abgestimmt sind. Die Stützelemente 48 nehmen Lager- bzw. Stützmittel auf, mit welchen eine Relativbewegung der gesamten Montagehilfseinrichtung 43 bezüglich der Aufstandsfläche 47 erfolgen kann. Diese Lager- bzw. Stützmittel können z.B. durch Rollen, Walzen, Kugeln, Bänder oder sogar durch Luftkissen-Elemente gebildet sein, mit welchen es möglich ist, die gesamte Montagehilfseinrichtung 43 mit dem zu bewegenden Formteil des Spritzgießwerkzeuges 4 einfach auf der Aufstandsfläche 47 bewegen zu können. Bevorzugt können mehrere der Luftkissen-Elemente zu einem gemeinsamen Luftgleitkissensystem zusammen geführt sein, um so eine sichere Bewegung der gesamten Montagehilfseinrichtung 43 relativ gegenüber der Aufstandsfläche 47 erzielen zu können. Bevorzugt werden in jedem Eckbereich des Grundrahmens 45 innerhalb der Stützelemente 48 das oder die Luftkissen-Elemente angeordnet.

Um eine Verschiebebewegung des auf der Tragplatte 46 abgestützten Formteils des Spritzgießwerkzeuges 4 zu erzielen, können an der Tragplatte 46 mehrere Wälzelemente 49 vorgesehen sein. Diese sind bevorzugt mehrfach in einer Reihe hintereinander angeordnet und zumeist durch Kugeln oder dergleichen gebildet. Um eine relative Verlagerung des hier nicht näher dargestellten Formteils des Spritzgießwerkzeuges 4 relativ gegenüber der Tragplatte 46 zu ermöglichen, können die einzelnen Wälzelemente 49 in senkrechter Richtung bezüglich einer bevorzugt parallel bezüglich der Aufstandsfläche 47 ausgerichteten Stützfläche 50 der Tragplatte 46 verstellbar ausgebildet sein. Durch die Veränderung des Abstandes der einzelnen Wälzelemente 49 relativ bezüglich der Stützfläche 50 kann ein Anheben des auf der Stützfläche auflagernden Formteils erreicht werden, wobei dann die Abstützung auf diesen Wälzelementen 49 erfolgt. Das Anheben kann beispielsweise durch hydraulische, pneumatisehe oder aber auch mechanische Druckmittel erfolgen. Für hydraulische oder pneumatische Druckmittel ist hier im Bereich unterhalb der Tragplatte 46 eine vereinfacht dargestellte Betätigungsvorrichtung 51 angeordnet und gezeigt. Dabei kann es sich beispielsweise um eine händisch zu bedienende Pumpe, insbesondere eine Hydraulikpumpe, handeln, mit welcher die einzelnen Wälzelemente 49 relativ bezüglich der Stützfläche 50 angehoben werden können. Dadurch, dass sich das hier nicht näher dargestellte Spritzgießwerkzeug 4 bzw. ein Formteil desselben an den Wälzelementen 49 in deren abgehobenen Stellung abstützt, kann eine einfache Verschiebebewegung in die Anlage 1 hinein bzw. aus dieser heraus durchgeführt werden.

Um ein unbeabsichtigtes Verrutschen bzw. eine relative Verlagerung des Formteils des Spritzgießwerkzeuges 4 relativ gegenüber der Tragplatte 46 zu vermeiden, können die Wälzelemente 49 in eine nutförmige Ausnehmung des Werkzeugteils des Spritzgießwerkzeuges 4 eingreifen. Zusätzlich kann bzw. können in den Randbereichen der Tragplatte 46 zumindest ein, bevorzugt jedoch mehrere Sicherungselemente 52 angeordnet sein. Diese können entweder als Anschlag dienen und/oder auch eine gewisse Führungsfunktion übernehmen.

Um auch im Bereich der Anlage 1 die Formteile, insbesondere die Formhälften 23, 24 des Spritzgießwerkzeuges 4 an den dafür vorgesehenen Anlagenteilen nicht nur haltern sondern während des Ein- oder Ausbaus auch relativ dazu verlagern zu können, kann es vorteilhaft sein, entsprechende Wälzelemente 49 auch hier vorzusehen um so ausgehend von der Montagehilfseinrichtung 43 die Formhälfte 23, 24 bzw. den Werkzeugteil 19 ausgehend von der Montage-Hilfseinrichtung 43 in die Anlage 1 einbauen und auch wiederum aus dieser ausbauen zu können.

Beim Ein- und/oder Ausbauen einzelner Werkzeugteile des Spritzgießwerkzeuges 4 in Verbindung mit dem Transportwagen 44 der Montagehilfseinrichtung 43 ist auf eine entsprechende niveaumäßige Abstimmung der Distanz der Stützfläche 50 von der Aufstandsfläche 47 im Hinblick auf die Aufnahmen der Formteile, insbesondere der Formhälften 23, 24 bzw. Werkzeugteils 19 des Spritzgusswerkzeuges 4 der Anlage 1 Bedacht zu nehmen. Dabei kann eine minimale Anpassung der beiden Niveaus zueinander während der Abgabe bzw. Übernahme der Werkzeugteile durch die in vertikaler Richtung verlagerbaren Wälzelemente 49 sowohl im Bereich des Transportwagens 44 als auch der Anlage 1 erfolgen.

In der Fig. 14 ist eine weitere mögliche und gegebenenfalls für sich eigenständige Ausbildung eines Halteorgans 10 gezeigt, wobei wiederum für gleiche Teile gleiche Bezugszeichen bzw. Bauteilbezeichnungen wie in den vorangegangenen Fig. 1 bis 13 verwendet werden. Um unnötige Wiederholungen zu vermeiden, wird auf die detaillierte Beschreibung in den vorangegangenen Fig. 1 bis 13 hingewiesen bzw. Bezug genommen.

Wie bereits zuvor erläutert, wird auch hier wiederum der Vorformling 3 mit seinem Halsfortsatz 18 auf dem Halteorgan 10 und damit in weiterer Folge am Transfermittel 7 gehalten. So ist hier bereits die Übergabe des Vorformlings 3 vom Spritzgießwerkzeug 4 hin auf das Halteorgan 10 erfolgt und kann in dieser Stellung vom Spritzgießwerkzeug 4 hin zur Blasform 6 entlang der Transportebene 41 mit dem Transfermittel 7 verbracht werden.

Für die Halterung und Klemmung des Halsfortsatzes 18 am Halteorgan 10 ist hier das zuvor beschriebene Halteelement 61 vorgesehen, welches aus einem elastisch verformbaren Material gebildet ist. Das Halteorgan 61 weist einen der Längsachse 60 näherliegenden Tragteil 62 auf, welcher in einem dem Halsfortsatz 18 zugewendeten Bereich einen radial vorragenden Ansatz 63 aufweist, an welchem das Halteelement 61 in axialer Richtung abgestützt ist. Um das Halteelement 61 in radialer Richtung aufweiten zu können, umfasst das Halteorgan 10 auch noch einen bevorzugt koaxial zum Tragteil 62 angeordneten Stellteil 64, welcher gemäß einem eingetragenen Doppelpfeil in axialer Richtung bezüglich des Tragteils 62 verstellbar ist. Wird der Stellteil 64 hin in Richtung auf den Ansatz 63 verstellt, erfolgt ein Verformen des Halteelementes 61 einerseits in axialer Richtung, wobei dann jedoch eine Außenabmessung des Halteelementes 61 in radialer Richtung zunimmt. Damit kann das Halteelement 61 zur klemmenden Anlage an der Innenfläche 20 des Halsfortsatzes 18 gebracht werden. Dabei sei erwähnt, dass es aber auch möglich wäre, den Stellteil 64 ortsfest anzuordnen und den Tragteil 62 mit seinem Ansatz 63 in axialer Richtung hin auf den Stellteil 64 zu verlagern. Dies stellt lediglich eine Bewegungsumkehr zwischen dem Tragteil 62 mit dem Stellteil 64 dar. Das Halteelement 61 ist so wiederum zwischen einer Freigabestellung und einer Klemmstellung zur Halterung des Halsfortsatzes 18 verstellbar ausgebildet.

Weiters ist im Bereich des Halsfortsatzes 18 in strichlierten Linien noch ein Teil der Blasform 6 dargestellt. Diese Stellung wird nach dem Transport des Vorformlings 3 in den Bereich der Blasstation bei geschlossener Blasform 6 erzielt. Um aus dem Vorformling 3 den gewünschten Hohlkörper 2 zu bilden, wird der eine Umformung zulassende, temperierte Werkstoff des Vorformlings 3 in einem kombinierten Streck- und/oder Blasvorgang entsprechend umgeformt, wie dies hinlänglich bekannt ist.

Um für den Blasvorgang eine ausreichende Dichtheit zwischen der Innenfläche 20 des Halsfortsatzes 18 und dem Halteorgan 10 zu erreichen, ist hier noch vereinfach angedeutet, dass im Bereich der Innenfläche 20 ein eigenes Dichtelement 65 am Halteorgan 10 vorgesehen sein kann, welches in einer umlaufenden Aufnahmenut 66 angeordnet ist. Die Aufnahmenut 66 steht ihrerseits über zumindest einen Kanal 67 für eine Druckbeaufschlagung mit einer Blasluft 68 mit einer im Halteorgan 10 angeordneten zentralen, axialen Durchgangsöffnung 69 in Strömungsverbindung.

Das Halteorgan 10 mit seinem Tragteil 62 bildet dabei einen in etwa rohrförmigen Körper aus, welcher in seinem Inneren die Durchgangsöffnung 69 ausbildet. Diese Durchgangsöffnung 69 dient nicht nur zur Zufuhr der Blasluft 68, sondern auch eines nicht näher dargestellten Streckstempels, sobald die Umformung des Vorformlings 3 durch einen kombinierten Streck-Blasvorgang erfolgen soll.

Im Bereich der Längsachse 60 ist mit einem Pfeil die für den Formgebungsvorgang notwendige Blasluft 68 angedeutet, welche über bekannte Anlagenteile dem Innenraum des Vorformlings 3 zugeführt wird. Ein Teil dieser Blasluft 68 tritt auch in den oder die Kanäle 67 ein und drückt das Dichtelement 65 dichtend an die Innenfläche 20 des Halsfortsatzes 18 an. Ein dichtender Sitz zwischen dem Dichtelement 65 und der Aufnahmenut 66 im Halteorgan 10, insbesondere dem Tragteil 62, bleibt dabei weiter unverändert aufrecht erhalten.

Damit kann eine von der Halterung des Vorformlings 3 unabhängige Abdichtung des Innenraums während des Formgebungsvorganges im Bereich der Blasstation aufrecht erhalten werden. Bei Wegnahme des durch die Blasluft 68 aufgebauten Druckes wird auch das Dichtelement 65 von seiner dichtenden Anlage an der Innenfläche 20 des Haltefortsatzes 18 rückverstellt. Diese Rückstellung erfolgt durch die dem Dichtelement 65 innewohnenden elastischen Werkstoffeigenschaften. Unabhängig davon bleibt aber der aus dem Vorformling 3 hergestellte Hohlkörper 2 über das weiterhin verformte Halteelement 61 am Halteorgan 10 gehalten. So kann dann der Hohlkörper 2 aus der Blasform 6 entnommen werden und hin zur Abgabestation weitertransportiert werden. Dies erfolgt immer noch mit dem gleichen Halteorgan 10, welches am Transfermittel 7 angeordnet und gehaltert ist.

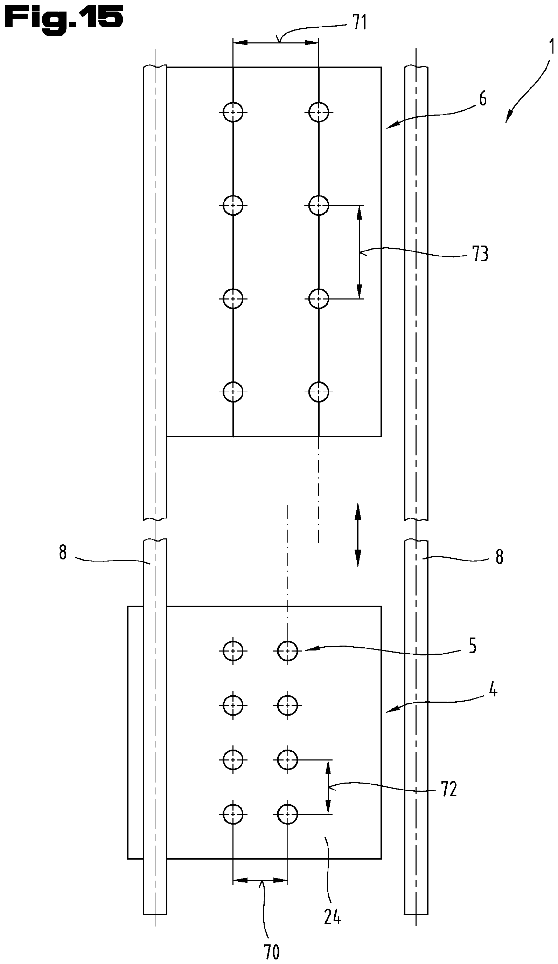

In der Fig. 15 ist eine weitere mögliche und gegebenenfalls für sich eigenständige Ausbildung eines Teils der Anlage 1 gezeigt, wobei wiederum für gleiche Teile gleiche Bezugszeichen bzw. Bauteilbezeichnungen wie in den vorangegangenen Fig. 1 bis 14 verwendet werden. Um unnötige Wiederholungen zu vermeiden, wird auf die detaillierte Beschreibung in den vorangegangenen Fig. 1 bis 14 hingewiesen bzw. Bezug genommen.

Hier ist eine vereinfachte Darstellung des Spritzgießwerkzeuges 4 sowie der Blasform 6 in Draufsicht gezeigt. Wie bereits zuvor beschrieben, können die einzelnen in Transportrichtung nebeneinander angeordneten Halteorgane 10 bzw. die aus diesen gebildeten Halteorgangruppen 11, 12 quer zur Transportrichtung gesehen relativ zueinander verlagert werden. Der Einfachheit halber sind hier nur wenige Kavitäten 5 im Bereich des Spritzgießwerkzeuges 4 dargestellt, wobei dies auch nur schematisch erfolgt ist. Die Transportrichtung des Transfermittels 7 ist zwischen dem Spritzgießwerkzeug 4 und der Blasform 6 vereinfacht mit einem Doppelpfeil angedeutet. Weiters sind auch nur vereinfacht die Transportschienen 8 gezeigt, welche zur Führung des Transfermittel 7 zwischen dem Spritzgießwerkzeug 4 und der Blasform 6 dienen. Die Kavitäten 5 im Bereich des Spritzgießwerkzeuges 4 weisen quer zur Transportrichtung gesehen einen Querabstand 70 auf, welcher kleiner ist, einem weiteren Querabstand 71, der für die Bildung der Hohlkörper 2 vorgesehenen Kavitäten im Bereich der Blasform 6. Dies dient zur Einsparung an Werkzeugabmessungen sowie Kosten im Bereich des Spritzgießwerkzeuges 4. Um großvolumigere Hohlkörper 2 aus den Vorformlingen 3 bilden zu können, ist diese Vergrößerung des Querabstandes 70 hin zum weiteren Querabstand 71 erforderlich, wie dies bereits zuvor detailliert erläutert worden ist.

Um auch in Transportrichtung eine Vergrößerung eines Längsabstandes 72 zwischen einzelnen in Transportrichtung gesehen hintereinander angeordneten Kavitäten 5 des Spritzgießwerkzeuges 4 und den in der Blasform 6 hintereinander angeordneten Kavitäten zu erzielen, können die einzelnen Halteorgane 10 im Bereich des Transfermittels 7 ebenfalls relativ zueinander in Transportrichtung verstellbar gehaltert bzw. gelagert sein.

Damit kann der im Bereich des Spritzgießwerkzeuges 4 eingetragene Längsabstand 72 zwischen unmittelbar in Transportrichtung hintereinander angeordneten Kavitäten 5 auf einen weiteren Längsabstand 73 analog des Kavitätenabstandes der Blasform 6 vergrößert werden, welcher in seinem Ausmaß größer ist als der erste Längsabstand 72. Die Abstände sowohl in Querrichtung als auch in Längsrichtung bezüglich der Transportrichtung gesehen, können auch als sogenannte Stichmaße bezeichnet werden. Um diese zusätzliche relative Längsverlagerung der einzelnen Halteorgane 10 zueinander durchführen zu können, sind entsprechende Führungs- und Verstellvorrichtungen im Bereich der die Halteorgane 10 tragenden bzw. lagernden Grundplatten 13, 14 des Transfermittels 7 vorzusehen.
Bei all den zuvor beschriebenen Ausbildungen des Transfermittels 7 erfolgt stets eine Ausrichtung der Längsachse 60 des Halsfortsatzes 18 mit seiner Innenfläche 20 in senkrechter Richtung bezüglich der Transportebene 41. Die Entnahme des Vorformlings 3 aus dem Spritzgießwerkzeug 4 erfolgt durch den Werkzeugteil 19 mit seinen Werkzeugteilsegmenten 25. Dies erfolgt in einer senkrechten Ausrichtung bezüglich der Transportebene 41, wobei diese bevorzugt eine lotrechte Bewegungsrichtung darstellt. Anschließend an die Übergabe und Halterung des Vorformlings am Halteorgan 10 bleibt die Ausrichtung der Längsachse 60 nahezu unverändert.
Die Ausführungsbeispiele zeigen mögliche Ausführungsvarianten der Anlage 1, insbesondere des Transfermittels 7 und/oder der Blasform 6.

Sämtliche Angaben zu Wertebereichen in gegenständlicher Beschreibung sind so zu verstehen, dass diese beliebige und alle Teilbereiche daraus mit umfassen, z.B. ist die Angabe 1 bis 10 so zu verstehen, dass sämtliche Teilbereiche, ausgehend von der unteren Grenze 1 und der oberen Grenze 10 mitumfasst sind, d.h. sämtliche Teilbereich beginnen mit einer unteren Grenze von 1 oder größer und enden bei einer oberen Grenze von 10 oder weniger, z.B. 1 bis 1,7, oder 3,2 bis 8,1 oder 5,5 bis 10.

Der Ordnung halber sei abschließend darauf hingewiesen, dass zum besseren Verständnis des Aufbaus der Anlage 1, insbesondere des Transfermittels 7 und/oder der Blasform 6 diese bzw. deren Bestandteile teilweise unmaßstäblich und/oder vergrößert und/oder verkleinert dargestellt wurden.

Die den eigenständigen erfinderischen Lösungen zugrundeliegende Aufgabe kann der Beschreibung entnommen werden.

Vor allem können die einzelnen in den Fig. 1; 2, 3; 4, 5, 6; 7; 8; 9; 10; 11, 12; 13; 14; 15 gezeigten Ausführungen den Gegenstand von eigenständigen, erfindungsgemäßen Lösungen bilden. Die diesbezüglichen, erfindungsgemäßen Aufgaben und Lösungen sind den Detailbeschreibungen dieser Figuren zu entnehmen.

**Bezugszeichenaufstellung**

| | | | |
|---|---|---|---|
| 1 | Anlage | 41 | Transportebene |
| 2 | Hohlkörper | 42 | Teilungsebene |
| 3 | Vorformling | 43 | Montagehilfseinrichtung |
| 4 | Spritzgießwerkzeug | 44 | Transportwagen |
| 5 | Kavität | 45 | Grundrahmen |
| | | | |
| 6 | Blasform | 46 | Tragplatte |
| 7 | Transfermittel | 47 | Aufstandsfläche |
| 8 | Transportschiene | 48 | Stützelement |
| 9 | Tragrahmen | 49 | Wälzelement |
| 10 | Halteorgan | 50 | Stützfläche |
| | | | |
| 11 | Halteorgangruppe | 51 | Betätigungsvorrichtung |
| 12 | Halteorgangruppe | 52 | Sicherungselement |
| 13 | Grundplatte | | |
| 14 | Grundplatte | 60 | Längsachse |
| 15 | Längssteg | 61 | Halteelement |
| | | 62 | Tragteil |
| 16 | Quersteg | 63 | Ansatz |
| 17 | Verbindungssteg | 64 | Stellteil |
| 18 | Halsfortsatz | | |
| 19 | Werkzeugteil | 65 | Dichtelement |
| 20 | Innenfläche | 66 | Aufnahmenut |
| | | 67 | Kanal |
| 21 | Haltearm | 68 | Blasluft |
| 22 | Hohlkörperteil | 69 | Durchgangsöffnung |
| 23 | Formhälfte | | |
| 24 | Formhälfte | 70 | Querabstand |
| 25 | Werkzeugteilsegment | 71 | Querabstand |
| | | 72 | Längsabstand |
| 26 | Stirnfläche | 73 | Längsabstand |
| 27 | Dichtelement | | |
| 28 | Haltearm | | |
| 29 | Halteteil | | |
| 30 | Bauteil | | |
| | | | |
| 31 | Aufnahme | | |
| 32 | Halteelement | | |
| 33 | Haltearm | | |
| 34 | Schenkel | | |
| 35 | Schenkel | | |
| | | | |
| 36 | Schulter | | |
| 37 | Blasformteil | | |
| 38 | Blasformteil | | |
| 39 | Blasformteil | | |
| 40 | Kavität | | |

## Patentansprüche

1. Anlage (1) zur Herstellung von Hohlkörpern (2) durch Spritzgießen und nachfolgendes Blasformen, umfassend
- ein Spritzgießwerkzeug (4) mit mindestens einer Kavität (5) zur Herstellung eines Vorformlings (3) mit einem Halsfortsatz (18) sowie einem an den Halsfortsatz (18) anschließenden Hohlkörperteil (22),
- eine Blasform (6) zur Formgebung des Hohlkörpers (2) aus dem Vorformling (3) und
- Transfermittel (7) zum Transport des Vorformlings (3) vom Spritzgießwerkzeug (4) hin zur Blasform (6), wobei das Transfermittel (7) einen Tragrahmen (9) umfasst, an welchem mindestens ein Halteorgan (10) für den zumindest einen Vorformling (3) angeordnet ist und
- wobei bei der Übergabe des Vorformlings (3) zwischen dem geöffneten Spritzgießwerkzeug (4) und dem Transfermittel (7) der Vorformling (3) an der Außenseite seines Halsfortsatzes (18) von einem Werkzeugteil (19) des Spritzgießwerkzeuges (4) gehalten ist und aus der Kavität (5) entnommen wird,
**dadurch gekennzeichnet,**
- **dass** der Tragrahmen (9) an einer durch Transportschienen (8) gebildeten Führungsanordnung in einer geradlinigen Transportbewegung zwischen dem Spritzgießwerkzeug (4) und der Blasform (6) geführt ist und dabei von den Transportschienen (8) eine horizontal ausgerichtete Transportebene (41) definiert ist,
- **dass** die Übergabe des Vorformlings (3) zwischen dem geöffneten Spritzgießwerkzeug (4) und dem Transfermittel (7) in einer senkrecht bezüglich der Transportebene (41) ausgerichteten, lotrechten Bewegungsrichtung erfolgt und dabei der Vorformling (3) mit dem Inneren seines Halsfortsatzes (18) auf das mindestens eine Halteorgan (10) aufgesetzt wird und dabei das mindestens eine Halteorgan (10) an einer Innenfläche (20) des Halsfortsatzes (18) anliegt,
- **dass** das mindestens eine Halteorgan (10) in seinem Zentrum zumindest eine als Durchgangsöffnung (69) ausgebildete Freistellung zur Zufuhr von Blasluft (68) sowie zum Hindurchführen eines Streckdorns in den Innenraum des Vorformlings (3) aufweist und
- **dass** während des Blasvorganges zur Bildung des Hohlkörpers (2) der Halsfortsatz (18) von dem zumindest einen Halteorgan (10) gehalten ist.

2. Anlage (1) nach Anspruch 1, **dadurch gekennzeichnet, dass** das zumindest eine Halteorgan (10) an seiner dem Halsfortsatz (18) zugewendeten Außenfläche ein Halteelement (32, 61) umfasst, welches zwischen einer Freigabestellung und einer Klemmstellung verstellbar ausgebildet ist.

3. Anlage (1) nach einem der vorhergehenden Ansprüche, **dadurch gekennzeichnet, dass** das zumindest eine Halteorgan (10) quer bezüglich der Transportrichtung des Tragrahmens (9) zwischen dem Spritzgießwerkzeug (4) und der Blasform (6) gesehen, relativ gegenüber dem Tragrahmen (9) verstellbar an diesem gelagert ist.

4. Anlage (1) nach einem der vorhergehenden Ansprüche, **dadurch gekennzeichnet, dass** mehrere Halteorgane (10) in der Transportrichtung des Tragrahmens (9) zwischen dem Spritzgießwerkzeug (4) und der Blasform (6) gesehen in einer ersten Halteorgangruppe (11) hintereinander an einer ersten Grundplatte (13) angeordnet sind und dass mehrere der Halteorgane (10) in zumindest einer weiteren Halteorgangruppe (12) neben der ersten Halteorgangruppe (11) an einer weiteren Grundplatte (14) angeordnet sind und die Grundplatten (13, 14) relativ gegenüber dem Tragrahmen (9) in Querrichtung bezüglich der Transportrichtung des Tragrahmens (9) an diesem verstellbar gelagert sind.

5. Anlage (1) nach Anspruch 1, **dadurch gekennzeichnet, dass** der Werkzeugteil (19) zwischen Formhälften (23, 24) des Spritzgießwerkzeuges (4) angeordnet ist und der Werkzeugteil (19) bei geschlossenem Spritzgießwerkzeug (4) den formgebenden Teil der Außenseite des Halsfortsatzes (18) bildet, wobei der Werkzeugteil (19) in senkrechter Richtung bezüglich einer Teilungsebene zwischen den Formhälften (23, 24) verstellbar geführt gelagert ist und der Werkzeugteil (19) mehrere Werkzeugteilsegmente (25) umfasst, welche in paralleler Richtung bezüglich der Teilungsebene der Formhälften (23, 24) gegeneinander verstellbar sind.

6. Anlage (1) nach einem der vorhergehenden Ansprüche, **dadurch gekennzeichnet, dass** die Blasform (6) in Transportrichtung gesehen mehrere nebeneinander angeordnete Blasformteile (37 bis 39) umfasst, und dass die Blasformteile (37 bis 39) in Transportrichtung des Transfermittels (7) gesehen in einer vertikal ausgerichteten Teilungsebene (42) relativ zueinander verstellbar geführt sind.

7. Anlage (1) nach einem der vorhergehenden Ansprüche, **dadurch gekennzeichnet, dass** nach erfolgtem Blasvorgang und geöffneter Blasform (6) der dabei hergestellte Hohlkörper (2) gemeinsam mit dem Halteorgan (10) in Querrichtung bezüglich der Transportrichtung relativ bezüglich des Tragrahmens (9) verlagert ist.

8. Verfahren zur Herstellung von Hohlkörpern (2) durch Spritzgießen und nachfolgendes Blasformen mit einer Anlage (1), in welcher in einem Spritzgießwerkzeug (4) in mindestens einer Kavität (5) ein Vorformling (3) mit einem Halsfortsatz (18) sowie einem an den Halsfortsatz (18) anschließenden Hohlkörperteil (22) gespritzt wird, nachfolgend das Spritzgießwerkzeug (4) geöffnet und der mindestens eine Vorformling (3) bei geöffnetem Spritzgießwerkzeug (4) an der Außenseite seines Halsfortsatzes (18) gehalten und aus der Kavität (5) entnommen wird, und der mindestens eine Vorformling (3) an ein Transfermittel (7) mit zumindest einem an einem Tragrahmen (9) angeordneten Halteorgan (10) übergeben wird und mit dem Transfermittel (7) hin zu einer Blasform (6) transportiert wird, wobei in der Blasform (6) aus dem Vorformling (3) der Hohlkörper (2) gebildet wird, **dadurch gekennzeichnet, dass** der Tragrahmen (9) an einer durch Transportschienen (8) gebildeten Führungsanordnung in einer geradlinigen Transportbewegung zwischen dem Spritzgießwerkzeug (4) und der Blasform (6) geführt wird und dabei von den Transportschienen (8) eine horizontal ausgerichtete Transportebene (41) definiert wird, wobei die Übergabe des Vorformlings (3) zwischen dem geöffneten Spritzgießwerkzeug (4) und dem Transfermittel (7) in einer senkrecht bezüglich der Transportebene (41) ausgerichteten, lotrechten Bewegungsrichtung durchgeführt wird und dabei der Vorformling (3) mit dem Inneren seines Halsfortsatzes (18) auf das mindestens eine an dem Tragrahmen (9) des Transfermittels (7) angeordnete Halteorgan (10) aufgesetzt und dabei das Halteorgan (10) an einer Innenfläche (20) des Halsfortsatzes (18) angelegt wird, wobei das mindestens eine Halteorgan (10) in seinem Zentrum zumindest eine als Durchgangsöffnung (69) ausgebildete Freistellung zur Zufuhr von Blasluft (68) sowie zum Hindurchführen eines Streckdorns in den Innenraum des Vorformlings (3) aufweist und dass während des Blasvorganges zur Bildung des Hohlkörpers (2) der Halsfortsatz (18) von dem zumindest einen Halteorgan (10) gehalten wird.

9. Verfahren nach Anspruch 8, **dadurch gekennzeichnet, dass** am zumindest einen Halteorgan (10) an seiner dem Halsfortsatz (18) zugewendeten Außenfläche ein Halteelement angeordnet wird und das Halteelement zwischen einer Freigabestellung und einer Klemmstellung verstellbar ist.

10. Verfahren nach Anspruch 8 oder 9, **dadurch gekennzeichnet, dass** das zumindest eine Halteorgan (10) in Querrichtung bezüglich der Transportrichtung des Tragrahmens (9) zwischen dem Spritzgießwerkzeug (4) und der Blasform (6) gesehen, relativ gegenüber dem Tragrahmen (9) verstellbar an diesem gelagert wird.

11. Verfahren nach Anspruch 8, **dadurch gekennzeichnet, dass** zwischen Formhälften (23, 24) des Spritzgießwerkzeuges (4) der Werkzeugteil (19) angeordnet wird, wobei bei geschlossenem Spritzgießwerkzeug (4) durch den Werkzeugteil (19) der formgebende Teil der Außenseite des Halsfortsatzes (18) gebildet wird und dass der Werkzeugteil (19) in senkrechter Richtung bezüglich einer Teilungsebene zwischen den Formhälften (23, 24) verstellbar geführt gelagert wird und der Werkzeugteil (19) durch mehrere Werkzeugteilsegmente (25) gebildet wird, welche in paralleler Richtung bezüglich der Teilungsebene der Formhälften (23, 24) gegeneinander verstellbar geführt werden.

12. Verfahren nach einem der Ansprüche 8 bis 11, **dadurch gekennzeichnet, dass** die Blasform (6) durch mehrere in Transportrichtung gesehen nebeneinander angeordnete Blasformteile (37 bis 39) gebildet wird, und dass die Blasformteile (37 bis 39) in Transportrichtung des Transfermittels (7) gesehen in einer vertikal ausgerichteten Teilungsebene (42) relativ zueinander verstellbar geführt werden.

13. Verfahren nach einem der Ansprüche 8 bis 12, **dadurch gekennzeichnet, dass** nach erfolgtem Blasvorgang und geöffneter Blasform (6) der dabei hergestellte Hohlkörper (2) gemeinsam mit dem Halteorgan (10) in Querrichtung bezüglich der Transportrichtung relativ bezüglich des Tragrahmens (9) verlagert wird.

## Claims

1. Installation (1) for the production of hollow bodies (2) by injection molding and subsequent blow molding, comprising
- an injection molding tool (4) with at least one cavity (5) for manufacturing a preform (3) having a neck-shaped extension (18) and a hollow body portion (22) adjacent to the neck-shaped extension (18),
- a blowing mold (6) for shaping the hollow body (2) from the preform (3) and
- transfer means (7) for transferring the preform (3) from the injection molding tool (4) to the blowing mold (6), the transfer means (7) comprising a support frame (9) on which at least one supporting device (10) for the at least one preform (3) is arranged and
- where during transfer of the preform (3) between the opened injection molding tool (4) and the transfer means (7), the preform (3) is retained by a tool part (19) of the injection molding tool (4) on the exterior of its neck-shaped extension (18), and is removed from the cavity (5),
**characterized in that**
- the support frame (9) is guided, at a guide assembly formed by transfer rails (8), between the injection molding tool (4) and the blowing mold (6) in a rectilinear transfer movement, and with a horizontally oriented transport plane (41) being defined by the transfer rails (8),
- the transfer of the preform (3) between the opened injection molding tool (4) and the transfer means (7) takes place in a perpendicular direction of movement, arranged vertically with respect to the transport plane (41), and with the preform (3) being placed on the at least one supporting device (10) with the interior of its neck-shaped extension (18), and the at least one supporting device (10) resting on an inner surface (20) of the neck-shaped extension (18),
- the at least one supporting device (10) has, at its center, at least one recess formed as a through opening (69) for the supply of blowing air (68) and for the penetration of an extension mandrel into the interior of the preform (3), and **in that**
- during the blowing process for forming the hollow body (2), the neck-shaped extension (18) is retained by the at least one supporting device (10).

2. Installation (1) according to Claim 1, **characterized in that** the at least one supporting device (10) comprises a retention element (32, 61) at its exterior surface facing the neck-shaped extension (18), which element is adapted to be adjustable between a release position and a clamping position.

3. Installation (1) according to one of the above Claims, **characterized in that** the at least one supporting device (10) is supported transversely to the direction of transport of the support frame (9) and supported by the support frame (9) so as to be adjustable with respect to the same, between the injection molding tool (4) and the blowing mold (6).

4. Installation (1) according to one of the above Claims, **characterized in that** several supporting devices (10) are arranged, in a first supporting device assembly (11), in a row on a first base plate (13) in the direction of transport of the support frame (9), between the injection molding tool (4) and the blowing mold (6), and **in that** several of the supporting devices (10) are arranged on another base plate (14) in at least one additional supporting device assembly (12) adjacent to the first supporting device assembly (11), and **in that** the base plates (13, 14) are supported adjustably by the support frame (9) transversely to the support frame (9) with respect to the direction of transport of the support frame (9).

5. Installation (1) according to Claim 1, **characterized in that** the tool part (19) is arranged between mold halves (23, 24) of the injection molding tool (4) and the tool part (19) forms the shaping part of the exterior of the neck-shaped extension (18) when the injection molding tool (4) is closed, the tool part (19) being supported so as to be adjustably guided in the vertical direction with respect to a mold joint between the mold halves (23, 24) and the tool part (19) comprising several tool part segments (25) which are adjustable with respect to each other in the direction parallel to the mold joint of the mold halves (23, 24).

6. Installation (1) according to one of the above Claims, **characterized in that** the blowing mold (6) comprises, in the direction of transport, several blowing mold parts (37 to 39) arranged in a row, seen in the direction of transport, and **in that** the blowing mold parts (37 to 39) are guided so as to be adjustable with respect to each other, seen in the direction of transport of the transfer means (7), in a vertically arranged mold joint (42).

7. Installation (1) according to one of the above Claims, **characterized in that** after completion of the blowing process and with the blowing mold (6) open, the hollow body (2) produced during this process is displaced, together with the supporting device (10), in the transverse direction with respect to the direction of transport in relation to the support frame (9).

8. Method for the production of hollow bodies (2) by injection molding and subsequent blow molding by means of an installation (1) where in an injection molding tool (4), a preform (3) with a neck-shaped extension (18) and a hollow body portion (22) adjacent to the neck-shaped extension (18) is injection-molded in at least one cavity (5), subsequently the injection molding tool (4) is opened and the at least one preform (3) is retained on the exterior of its neck-shaped extension (18) and is removed from the cavity (5) when the injection molding tool (4) is open, and the at least one preform (3) is transferred to a transfer means (7) with at least one supporting device (10) arranged at a support frame (9) and is transferred to a blowing mold (6) by the transfer means (7), the hollow body (2) being formed in the blowing mold (6) from the preform (3); **characterized in that** the support frame (9) is guided, at a guide assembly formed by transfer rails (8), between the injection molding tool (4) and the blowing mold (6) in a rectilinear transfer movement, and with a horizontally oriented transport plane (41) being defined by the transfer rails (8), the transfer of the preform (3) between the opened injection molding tool (4) and the transfer means (7) being performed in a perpendicular direction of movement, arranged vertically with respect to the transport plane (41), and with the preform (3) being placed on the at least one supporting device (10) arranged at the support frame (9) of the transfer means (7) with the interior of its neck-shaped extension (18) and the supporting device (10) being put against an inner surface (20) of the neck-shaped extension (18) during this process, the at least one supporting device (10) having, at its center, at least one recess formed as a through opening (69) for the supply of blowing air (68) and for the penetration of an extension mandrel into the interior of the preform (3), and **in that** during the blowing process for forming the hollow body (2), the neck-shaped extension (18) is retained by the at least one supporting device (10).

9. Method according to Claim 8, **characterized in that** at the at least one supporting device (10), a retention element is arranged at its exterior surface facing the neck-shaped extension (18), and **in that** the retention element is adjustable between a release position and a clamping position.

10. Method according to Claim 8 or 9, **characterized in that** the at least one supporting device (10) is supported transversely to the direction of transport of the support frame (9) and supported by the support frame (9) so as to be adjustable with respect to the same, between the injection molding tool (4) and the blowing mold (6).

11. Method according to Claim 8, **characterized in that** the tool part (19) is arranged between mold halves (23, 24) of the injection molding tool (4), where with the injection molding tool (4) closed, the shaping part of the exterior of the neck-shaped extension (18) is formed by the tool part (19) ; and **in that** the tool part (19) is supported so as to be adjustably guided in the vertical direction with respect to a mold joint between the mold halves (23, 24) and the tool part (19) is formed by several tool part segments (25) which are guided so as to be adjustable with respect to each other in the direction parallel with respect to the mold joint of the mold halves (23, 24).

12. Method according to one of Claims 8 through 11, **characterized in that** the blowing mold (6) is formed by several blowing mold parts (37 to 39) arranged next to each other, seen in the direction of transport, and **in that** the blowing mold parts (37 to 39) are guided so as to be adjustable with respect to each other, seen in the direction of transport of the transfer means (7), in a vertically arranged mold joint (42) .

13. Method according to one of Claims 8 through 12, **characterized in that** after the completed blowing process and with the blowing mold (6) opened, the hollow body (2) produced during this process is displaced, together with the supporting device (10), in the direction transverse to the direction of transport in relation to the support frame (9).

## Revendications

1. Installation (1) de fabrication de corps creux (2) par moulage par injection suivi d'un moulage par soufflage, comprenant
- un outillage de moulage par injection (4) comportant au moins une cavité (5) pour la fabrication d'une ébauche (3) avec un col de prolongement (18) et une pièce de corps creux (22) se raccordant au col de prolongement (18),
- un moule de soufflage (6) pour façonner le corps creux (2) à partir de l'ébauche (3) et
- un moyen de transfert (7) pour le transfert de l'ébauche (3) de l'outillage de moulage par injection (4) vers le moule de soufflage (6), le moyen de transfert (7) comprenant un cadre porteur (9) au niveau duquel est disposé au moins un organe de retenue (10) pour l'au moins un une ébauche (3) et
- sachant que, lors du transfert de l'ébauche (3) entre l'outillage de moulage par injection ouvert (4) et le moyen de transfert (7), l'ébauche (3) est maintenue par la face extérieure de son col de prolongement (18) par une pièce d'outillage (19) de l'outillage de moulage par injection (4) et sortie de la cavité (5),
**caractérisée en ce**
- **que** le cadre porteur (9) est guidé au niveau d'un dispositif de guidage constitué par des rails de transport (8) dans un mouvement de transport rectiligne entre l'outillage de moulage par injection (4) et le moule de soufflage (6) et qu'un plan de transport (41) orienté horizontalement est alors défini par les rails de transport (8),
- **que** le transfert de l'ébauche (3) entre l'outillage de moulage par injection ouvert (4) et le moyen de transfert (7) dans un sens de mouvement vertical orienté perpendiculairement au sens de transport (41) de l'ébauche (3) est alors posé par l'intérieur de son col de prolongement (18) sur l'au moins un organe de retenue (10) et l'au moins un organe de retenue (10) repose alors au niveau d'une surface intérieure (20) du col de prolongement (18),
- **que** l'au moins un organe de retenue (10) présente dans son centre au moins une position de dégagement réalisée sous forme d'un orifice traversant (69) pour acheminer de l'air de soufflage (68) et pour permettre le passage d'un mandrin d'étirement dans l'intérieur de l'ébauche (3) et
- **que**, pendant l'opération de soufflage permettant de former le corps creux (2), le col de prolongement (18) est maintenu par l'au moins un organe de retenue (10).

2. Installation (1) selon la revendication 1, **caractérisée en ce que** l'au moins un organe de retenue (10) comprend, au niveau de sa surface extérieure tournée vers le col de prolongement (18), un élément de retenue (32, 61) qui est réalisé de manière à être permutable entre une position de dégagement et une position de serrage.

3. Installation (1) selon une des revendications précédentes, **caractérisée en ce que** l'au moins un organe de retenue (10), vu transversalement par rapport au sens de transport du cadre porteur (9) s'appuie entre l'outillage de moulage par injection (4) et le moule de soufflage (6) de manière réglable par rapport au cadre porteur (9), au niveau de celui-ci.

4. Installation (1) selon une des revendications précédentes, **caractérisée en ce que** plusieurs organes de retenue (10), vus dans le sens de transport du cadre porteur (9) entre l'outillage de moulage par injection (4) et le moule de soufflage (6), sont disposés dans un premier groupe d'organes de retenue (11) les uns derrière les autres au niveau d'une première plaque de base (13) et que plusieurs des organes de retenue (10) sont disposés dans au moins un autre groupe d'organes de retenue (12) près du premier groupe d'organes de retenue (11) au niveau d'une autre plaque de base (14) et que les plaques de base (13, 14) s'appuient de manière réglable par rapport au cadre porteur (9) dans le sens transversal par rapport au sens de transport du cadre porteur (9) au niveau de celui-ci.

5. Installation (1) selon la revendication 1, **caractérisée en ce que** la pièce d'outillage (19) est disposée entre des moitiés de moule (23, 24) de l'outillage de moulage par injection (4) et que la pièce d'outillage (19), lorsque l'outillage de moulage par injection (4) est fermé, constitue la pièce conférant la forme de la face extérieure du col de prolongement (18), la pièce d'outillage (19) s'appuyant de manière à être guidée de manière réglable dans le sens vertical par rapport à un plan de division entre les moitiés de moule (23, 24) et la pièce d'outillage (19) comprenant plusieurs segments de pièce d'outillage (25) qui sont déplaçables les uns par rapport aux autres dans le sens parallèle par rapport au plan de division des moitiés de moule (23, 24) .

6. Installation (1) selon une des revendications précédentes, **caractérisée en ce que** le moule de soufflage (6) comprend, vu dans le sens de transport, plusieurs pièces de moulage par soufflage (37 à 39) juxtaposées, et que les pièces de moulage par soufflage (37 à 39), vues dans le sens de transport du moyen de transfert (7), sont guidées de manière à être réglables les unes par rapport aux autres dans un plan de division orienté verticalement (42).

7. Installation (1) selon une des revendications précédentes, **caractérisée en ce que**, une fois que l'opération de soufflage est réalisée et que le moule de soufflage (6) est ouvert, le corps creux (2) alors fabriqué est déplacé avec l'organe de retenue (10) dans le sens transversal par rapport au sens de transport par rapport au cadre porteur (9).

8. Procédé de fabrication de corps creux (2) par moulage par injection suivi d'un moulage par soufflage au moyen d'une installation (1) dans laquelle, dans un outillage de moulage par injection (4), dans au moins une cavité (5) une ébauche (3) dotée d'un col de prolongement (18) et d'une pièce de corps creux (22) se raccordant au col de prolongement (18) est injectée, l'outillage de moulage par injection (4) étant ensuite ouvert et l'au moins une ébauche (3), alors que l'outillage de moulage par injection (4) est ouvert, maintenue au niveau de la face extérieure de son col de prolongement (18) et sortie de la cavité (5), et l'au moins une ébauche (3) est transférée à un moyen de transfert (7) comportant au moins un organe de retenue (10) disposé au niveau d'un cadre porteur (9) et est transportée avec le moyen de transfert (7) vers un moule de soufflage (6), le corps creux (2) étant réalisé dans le moule de soufflage (6) à partir de l'ébauche (3), **caractérisé en ce que** le cadre porteur (9) est guidé au niveau d'un dispositif de guidage constitué par des rails de transport (8) dans un mouvement de transport rectiligne entre l'outillage de moulage par injection (4) et le moule de soufflage (6) et qu'un plan de transport (41) orienté horizontalement est alors défini par les rails de transport (8), le transfert de l'ébauche (3) étant réalisé entre l'outillage de moulage par injection ouvert (4) et le moyen de transfert (7) dans un sens de mouvement vertical orienté perpendiculairement au sens de transport (41) et l'ébauche (3) étant alors posée par l'intérieur de son col de prolongement (18) sur l'au moins un organe de retenue (10) disposé au niveau du cadre porteur (9) du moyen de transport (7) et l'organe de retenue (10) étant alors posé au niveau d'une surface intérieure (20) du col de prolongement (18), l'au moins un organe de retenue (10) présentant dans son centre au moins une position de dégagement réalisée sous forme d'un orifice traversant (69) pour acheminer de l'air de soufflage (68) et pour permettre le passage d'un mandrin d'étirement dans l'intérieur de l'ébauche (3) et que, pendant l'opération de soufflage permettant de former le corps creux (2), le col de prolongement (18) est maintenu par l'au moins un organe de retenue (10).

9. Procédé selon la revendication 8, **caractérisé en ce que**, au niveau d'au moins un élément de retenue (10), au niveau de sa surface extérieure tournée vers le col de prolongement (18), un élément de retenue est disposé et que cet élément de retenue est permutable entre une position de dégagement et une position de serrage.

10. Procédé selon la revendication 8 ou 9, **caractérisé en ce que** l'au moins un organe de retenue (10), vu dans le sens transversal par rapport au sens de transport du cadre porteur (9) entre l'outillage de moulage par injection (4) et le moule de soufflage (6), s'appuie de manière réglable par rapport au cadre porteur (9) au niveau de celui-ci.

11. Procédé selon la revendication 8, **caractérisé en ce que** la pièce d'outillage (19) est disposée entre les moitiés de moule (23, 24) de l'outillage de moulage par injection (4), sachant que, lorsque l'outillage de moulage par injection (4) est fermé, la pièce conférant la forme de la face extérieure du col de prolongement (18) est constituée par la pièce d'outillage (19) et que la pièce d'outillage (19) s'appuie en étant guidée de manière réglable dans le sens vertical par rapport à un plan de division entre les moitiés de moule (23, 24) et que la pièce d'outillage (19) est constituée par plusieurs segments de pièce d'outillage (25) qui sont guidés de manière réglable les uns par rapport aux autres dans le sens parallèle par rapport au plan de division des moitiés de moule (23, 24).

12. Procédé selon une des revendications 8 à 11, **caractérisé en ce que** le moule de soufflage (6) est constitué par plusieurs pièces de moule de soufflage (37 à 39) disposées les unes derrière les autres vues dans le sens de transport, et que les pièces de moule de soufflage (37 à 39), vues dans le sens de transport du moyen de transfert (7), sont guidées de manière réglable les unes par rapport aux autres dans un plan de division (42) orienté verticalement.

13. Procédé selon une des revendications 8 à 12, **caractérisé en ce que**, une fois que l'opération de soufflage est terminée et que le moule de soufflage est ouvert (6), le corps creux (2) alors fabriqué est déplacé avec l'organe de retenue (10) dans le sens transversal par rapport au sens de transport par rapport au cadre porteur (9).
